# EUROPEAN PATENT APPLICATION

(11) **EP 4 521 230 A1**
(43) Date of publication of application: **12.03.2025**
(21) Application number: 23830367.1
(22) Date of filing: 28.06.2023
(51) Int. Cl.: G06F 3/14, G06F 1/16, H04M 1/02

(54) **DISPLAY METHOD AND APPARATUS FOR ELECTRONIC DEVICE, AND STORAGE MEDIUM**

(30) Priority: 30.06.2022 CN 202210772715
(71) Applicant: Huawei Technologies Co., Ltd., Shenzhen, Guangdong 518129 (CN)
(72) Inventor: MA, Liangchuan, Shenzhen, Guangdong 518129 (CN); CHEN, Feng, Shenzhen, Guangdong 518129 (CN); WANG, Zhengyun, Shenzhen, Guangdong 518129 (CN); DU, Yiquan, Shenzhen, Guangdong 518129 (CN); WANG, Shuyun, Shenzhen, Guangdong 518129 (CN)
(74) Representative: Goddar, Heinz J.
(86) International application number: PCT/CN2023/103465
(87) International publication number: WO 2024/002196

(57) **Abstract**

An electronic device display method, an apparatus, and a storage medium are provided, applied to an electronic device having a foldable display screen. The method includes: When the foldable display screen of the electronic device is in a first physical state, a wallpaper displayed on the foldable display screen is a first area of a first wallpaper; playing a first animation in a process in which the foldable display screen changes from the first physical state to a second physical state, where the first animation includes a first frame and a second frame, a wallpaper in the first frame is a second area of the first wallpaper, a wallpaper in the second frame is a third area of the first wallpaper, and sizes of the second area and the third area and locations of the second area and the third area in the first wallpaper are related to an unfolding angle of the foldable display screen; and when the foldable display screen is in the second physical state, a wallpaper displayed on the foldable display screen is a fourth area of the first wallpaper, where the fourth area is a wallpaper in a final animation frame in the first animation.

## Description

### CROSS-REFERENCE TO RELATED APPLICATIONS

This application claims priority to Chinese Patent Application No. 202210772715.3, filed with the China National Intellectual Property Administration on June 30, 2022 and entitled "ELECTRONIC DEVICE DISPLAY METHOD, APPARATUS, AND STORAGE MEDIUM", which is incorporated herein by reference in its entirety.

### TECHNICAL FIELD

This application relates to the field of terminal technologies, and in particular, to an electronic device display method, an apparatus, and a storage medium.

### BACKGROUND

A foldable display screen includes a screen of a type such as a flexible organic light-emitting diode (organic light-emitting diode, OLED). Compared with a conventional screen, the foldable display screen is light and thin, and is easy to bend. Currently, the foldable display screen has been used in an electronic device such as a mobile phone or a tablet computer.

When using an electronic device having a foldable display screen, a user may fold or unfold the screen. Currently, in a process of unfolding or folding a screen, display of the screen lacks dynamic effect. For example, in the process of unfolding or folding the screen, a wallpaper cannot present dynamic display effect that matches the unfolding or folding process, resulting in limited user experience.

### SUMMARY

Embodiments of this application provide an electronic device display method, an apparatus, and a storage medium, applied to an electronic device having a foldable display screen, to display dynamic change effect of a wallpaper in a process in which a physical state of the foldable display screen changes.

According to a first aspect, an electronic device display method is provided, applied to an electronic device having a foldable display screen. The method includes:

When the foldable display screen of the electronic device is in a first physical state, a wallpaper displayed on the foldable display screen is a first area of a first wallpaper; playing a first animation in a process in which the foldable display screen changes from the first physical state to a second physical state, where the first animation includes a first frame and a second frame, a wallpaper in the first frame is a second area of the first wallpaper, a wallpaper in the second frame is a third area of the first wallpaper, and sizes of the second area and the third area and locations of the second area and the third area in the first wallpaper are related to an unfolding angle of the foldable display screen; and when the foldable display screen is in the second physical state, a wallpaper displayed on the foldable display screen is a fourth area of the first wallpaper, where the fourth area is a wallpaper in a final animation frame in the first animation.

In the foregoing implementation, in the process in which the foldable display screen of the electronic device changes from the first physical state to the second physical state, the first animation is played, so that the animation can be displayed when the physical state of the screen changes. For any two animation frames (the first frame and the second frame) in the first animation, the wallpaper in the first frame is the second area of the first wallpaper (for example, a full-screen wallpaper), and the wallpaper in the second frame is the third area of the first wallpaper. The sizes of the second area and the third area and the locations of the second area and the third area in the first wallpaper are related to the unfolding angle of the foldable display screen. Therefore, as the unfolding angle of the foldable display screen gradually changes, a size of a wallpaper displayed on the screen and a location of the wallpaper in the full-screen wallpaper change correspondingly, thereby implementing dynamic change effect of the wallpaper in a process in which the physical state of the foldable display screen changes.

In a possible implementation, the method further includes: generating the first animation in response to the change of the foldable display screen from the first physical state to the second physical state.

In the foregoing implementation, the first animation is generated when the foldable display screen changes from the first physical state to the second physical state, so that the wallpaper in the animation frame in the first animation can match the change process (for example, the unfolding angle in the change process).

In a possible implementation, the generating the first animation includes: determining wallpaper location change information based on a first location and a second location, where the first location is a location that is in the first wallpaper and that is of a wallpaper displayed on a first screen part of the foldable display screen in the first physical state, and the second location is a location that is in the first wallpaper and that is of a wallpaper displayed on the first screen part in the second physical state; and generating the first animation based on the wallpaper location change information, the unfolding angle of the foldable display screen, and an animation effect parameter of the first animation.

Optionally, when the first physical state is a folded state, the first location is a preset location in the first wallpaper. When the first physical state is an unfolded state, the first location is a rightmost location of the first wallpaper. When the first physical state is an intermediate state, the first location is between the preset location on a first screen and the rightmost location, and is related to an unfolding angle of the foldable display screen corresponding to the first physical state.

In the foregoing implementation, based on a location change from the first location (a location that is in a first screen wallpaper and that is of a wallpaper displayed on a primary screen before the physical state changes) to the second location (a location that is in a first screen wallpaper and that is of a wallpaper displayed on the primary screen after the physical state changes), a location change of the wallpaper in each animation frame in the first animation may be determined, to generate each animation frame in the first animation, so that the animation frame in the first animation can match the change process from the first physical state to the second physical state.

In a possible implementation, the generating the first animation based on the wallpaper location change information, the unfolding angle of the foldable display screen, and an animation effect parameter of the first animation includes: determining a size of a wallpaper in each animation frame in the first animation based on an unfolding angle corresponding to each animation frame in the process from the first physical state to the second physical state; determining a location that is in the first wallpaper and that is of the wallpaper in each animation frame in the first animation based on the wallpaper location change information, the unfolding angle corresponding to each animation frame in the first animation, and the animation effect parameter of the first animation; determining an area that is in the first wallpaper and that is of the wallpaper in each animation frame based on the size of the wallpaper in each animation frame in the first animation and the location that is in the first wallpaper and that is of the wallpaper in each animation frame; and generating the first animation based on the area that is in the first wallpaper and that is of the wallpaper in each animation frame.

In the foregoing implementation, the size of the wallpaper in each animation frame in the first animation is related to the unfolding angle, and the location that is in the first wallpaper and that is of the wallpaper in each animation frame in the first animation frame is related to the address location change information, so that the animation frame in the first animation can match the change process from the first physical state to the second physical state; and in the process in which the foldable display screen changes from the first physical state to the second physical state, the size of the wallpaper displayed on the screen and the location of the wallpaper in the first wallpaper (for example, the full-screen wallpaper) change accordingly to implement dynamic display effect.

In a possible implementation, the determining an area that is in the first wallpaper and that is of the wallpaper in each animation frame based on the size of each animation frame in the first animation and the location that is in the first wallpaper and that is of the wallpaper in each animation frame includes: changing, based on the size of each animation frame in the first animation and the location that is in the first wallpaper and that is of the wallpaper in each animation frame, a location and a size of a mask on a display surface in which the first wallpaper is located, to obtain the wallpaper in each animation frame. The wallpaper in each animation frame is a visible area other than an area shielded by the mask on the display surface in which the first wallpaper is located.

In the foregoing implementation, the location and the size of the mask on the display surface (surface) in which the first wallpaper is located are changed, so that a visible area on the display surface can be changed. The visible area is a wallpaper in an animation frame. In this way, visual effect of wallpaper movement can be implemented by changing the location of the mask on the display surface (surface) in which the first wallpaper is located, and operations of repeatedly drawing a wallpaper for each animation frame can be reduced, thereby reducing system overheads.

In a possible implementation, the wallpaper is a live wallpaper, the live wallpaper includes a wallpaper frame sequence, and the wallpaper frame sequence includes at least two wallpaper animation frames. The generating the first animation includes:
determining wallpaper location change information based on a first location and a second location, where the first location is a location that is in the first wallpaper and that is of a wallpaper displayed on a first screen part of the foldable display screen in the first physical state, and the second location is a location that is in the first wallpaper and that is of a wallpaper displayed on the first screen part in the second physical state; determining a correspondence between a wallpaper in each animation frame in the first animation and a wallpaper animation frame in the wallpaper frame sequence; and generating the first animation based on the wallpaper location change information, the unfolding angle of the foldable display screen, an animation effect parameter of the first animation, and the correspondence between each animation frame in the first animation and a wallpaper animation frame in the wallpaper sequence.

In the foregoing implementation, in a case in which the live wallpaper is used, dynamic display effect of the wallpaper may be implemented in the process in which the physical state of the foldable display screen changes, thereby improving user experience.

Optionally, the correspondence between a wallpaper in each animation frame in the first animation and a wallpaper animation frame in the wallpaper sequence is as follows: Animation frames in the first animation are in one-to-one correspondence with wallpaper animation frames in the wallpaper frame sequence, a wallpaper in a 1^{st} animation frame in the first animation is an m^{th} frame in the wallpaper frame sequence, and the m^{th} frame is a wallpaper displayed on the foldable display screen in the first physical state, where m is an integer greater than or equal to 1.

Optionally, if a wallpaper in a k^{th} animation frame in the first animation is a final wallpaper animation frame in the wallpaper frame sequence, a wallpaper in a (k+1)^{th} animation frame in the first animation is a 1^{st} wallpaper animation frame in the wallpaper frame sequence.

In a possible implementation, the first screen part is a primary screen of the foldable display screen.

In a possible implementation, the animation effect parameter includes at least one of the following: play duration, an animation effect curve, and an animation effect manner.

In a possible implementation, when the first physical state is the folded state, the first location is the preset location in the first wallpaper.

In a possible implementation, the method further includes: obtaining the animation effect parameter that is set by a system. In the foregoing implementation, the animation effect parameter is set by the system, so that unified dynamic display effect may be implemented for different applications.

In a possible implementation, the method further includes: obtaining the animation effect parameter that is set by an application. In the foregoing implementation, the animation effect parameter is set by the application, so that different applications may set animation effect parameters according to requirements, thereby improving flexibility.

In a possible implementation, the foldable display screen includes any one of the following: an outward foldable screen, an inward foldable screen, and a rollable screen.

In a possible implementation, when the foldable display screen is an outward foldable screen or an inward foldable screen, the first physical state is a folded state, an intermediate state, or an unfolded state. The intermediate state is a state between the folded state and the unfolded state, and the intermediate state includes at least one of a first intermediate state and a second intermediate state.

When the first physical state is the folded state, the second physical state is the intermediate state or the unfolded state.

When the first physical state is the unfolded state, the second physical state is the intermediate state or the folded state.

When the first physical state is the first intermediate state, the second physical state is the unfolded state, the folded state, or the second intermediate state.

According to a second aspect, an electronic device is provided, including a foldable display screen and one or more processors. One or more memories store one or more computer programs, and the one or more computer programs include instructions. When the instructions are executed by the one or more processors, the electronic device is enabled to perform the method according to any one of the first aspect or the possible implementations of the first aspect.

According to a third aspect, a computer-readable storage medium is provided, including a computer program. When the computer program is run on an electronic device, the electronic device is enabled to perform the method according to any one of the first aspect or the possible implementations of the first aspect.

According to a fourth aspect, a computer program product is provided. When the computer program product runs on an electronic device, the electronic device is enabled to perform the method according to any one of the first aspect or the possible implementations of the first aspect.

According to a fifth aspect, a chip system is provided, including a memory configured to store a computer program, and a processor. After the processor invokes the computer program from the memory and runs the computer program, an electronic device on which the chip system is installed is enabled to perform the method according to any one of the first aspect or the possible implementations of the first aspect.

For beneficial effects of the second aspect to the fifth aspect, refer to the beneficial effects of the first aspect. Details are not described again.

### BRIEF DESCRIPTION OF DRAWINGS

FIG. 1A is an example diagram of an outward-folding foldable display screen according to an embodiment of this application;
FIG. 1B is an example diagram of an outward-folding foldable display screen according to an embodiment of this application;
FIG. 1C is an example diagram of an outward-folding foldable display screen according to an embodiment of this application;
FIG. 1D is an example diagram of an inward-folding foldable display screen according to an embodiment of this application;
FIG. 2A is an example diagram of a screen display principle according to an embodiment of this application;
FIG. 2B is an example diagram of screen display effect according to an embodiment of this application;
FIG. 3 is a diagram of a user interface according to an embodiment of this application;
FIG. 4 is a diagram of a hardware structure of an electronic device according to an embodiment of this application;
FIG. 5 is a diagram of a software architecture of an electronic device according to an embodiment of this application;
FIG. 6a is a schematic flowchart of a display method according to an embodiment of this application;
FIG. 6b is a diagram of a process of generating a first animation according to an embodiment of this application;
FIG. 6c is a diagram of a process of generating a first animation based on wallpaper location change information, an unfolding angle of a foldable display screen, and an animation effect parameter of the first animation according to an embodiment of this application;
FIG. 7 is a diagram of wallpapers displayed on a foldable display screen in an unfolded state, an intermediate state, and a folded state according to an embodiment of this application;
FIG. 8 is a diagram of a principle and effect of dynamically displaying a wallpaper in a process of unfolding a foldable display screen according to an embodiment of this application;
FIG. 9 is a diagram of a principle and effect of dynamically displaying a wallpaper in a process of folding a foldable display screen according to an embodiment of this application;
FIG. 10 is a schematic flowchart of a display method in a process in which a physical state of a foldable display screen changes according to an embodiment of this application; and
FIG. 11 is a schematic flowchart of a display method in a process in which a physical state of a foldable display screen changes according to an embodiment of this application.

### DESCRIPTION OF EMBODIMENTS

The following clearly describes the technical solutions in embodiments of this application with reference to the accompanying drawings in embodiments of this application. Terms used in the following embodiments are merely intended to describe specific embodiments, but are not intended to limit this application. The terms "one", "a", "the", "the foregoing", "this", and "the one" of singular forms used in this specification and the appended claims of this application are also intended to include forms such as "one or more", unless otherwise specified in the context clearly. It should be further understood that, in embodiments of this application, "one or more" means one, two, or more, and the term "and/or" describes an association relationship between associated objects, and indicates that three relationships may exist. For example, A and/or B may indicate the following cases: Only A exists, both A and B exist, and only B exists, where A and B may be singular or plural. The character "/" generally represents an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and variations thereof all mean "including but not limited to", unless otherwise specifically emphasized in another manner.

"A plurality of" in embodiments of this application indicates two or more. In the descriptions of embodiments of this application, terms such as "first" and "second" are merely used for distinction and description, and shall not be understood as an indication or implication of relative importance or an indication or implication of an order.

This application provides a display method for an electronic device having a foldable display screen and a related electronic device, to display dynamic change effect of a wallpaper in a process in which a physical state of the foldable display screen changes, thereby improving visual experience of a user. The method and the electronic device are based on a same technical concept. Because the method and the electronic device have a similar problem-resolving principle, reference may be mutually made to implementations of the electronic device and the method. Repeated parts are not described again.

In the solution provided in embodiments of this application, in a process in which a physical state of a foldable display screen of an electronic device changes, the electronic device displays a first animation, and wallpapers in different animation frames in the first animation are different areas of a full-screen wallpaper, so that a wallpaper change can be dynamically displayed in the process in which the physical state of the foldable display screen changes, thereby improving visual experience of a user.

In the following, some terms in this application are described, to help a person skilled in the art have a better understanding.
(1) An electronic device is a device configured with a foldable display screen, and can perform human-computer interaction through the foldable display screen. For example, the electronic device may be a mobile phone, a tablet computer, a notebook computer, a netbook, an in-vehicle device, a business smart terminal (including a video phone, a conference desktop smart terminal, and the like), a personal digital assistant (personal digital assistant, PDA), an augmented reality (augmented reality, AR)/virtual reality (virtual reality, VR) device, or the like. A specific form of the electronic device is not limited in embodiments of this application.
(2) The foldable display screen is a screen whose form may be changed by an external force, and includes at least two screen parts. Sizes of the screen parts may be different, or may be the same. In the following embodiments, a "screen" or a "screen part" means a part or a whole of the foldable display screen. In some cases, the foldable display screen is also referred to as a flexible screen.

One screen part of the foldable display screen may be one independent and complete screen (or one independent display unit, for example, may be controlled by a processor as a whole), or may be a part of a display area on one complete screen. The electronic device may separately control display states of different screen parts. Based on the control, a display state of each screen part may be specifically a display-enabled state (also referred to as a display state, for example, a screen-on state) or a display-disabled state (for example, a screen-off state).

Two adjacent screen parts may be movably connected based on a bent part (for example, a hinge or a flexible material). In some implementations, an outside of the connecting part is also covered with a display screen (also referred to as a connecting screen or a foldable edge). In this way, different screen parts of the foldable display screen may be unfolded based on an external force (for example, unfolded by a user by hand) into a full screen for display, or may be folded based on an external force (for example, folded by a user by hand) into a single screen for display. For example, the foldable display screen may be an 8-inch full screen for display when unfolded into a full screen, and may be a 6.6-inch or 6.38-inch screen part for display after being folded.

In conclusion, the foldable display screen includes at least one bent part, and a plurality of screen parts located on two sides of the bent part.

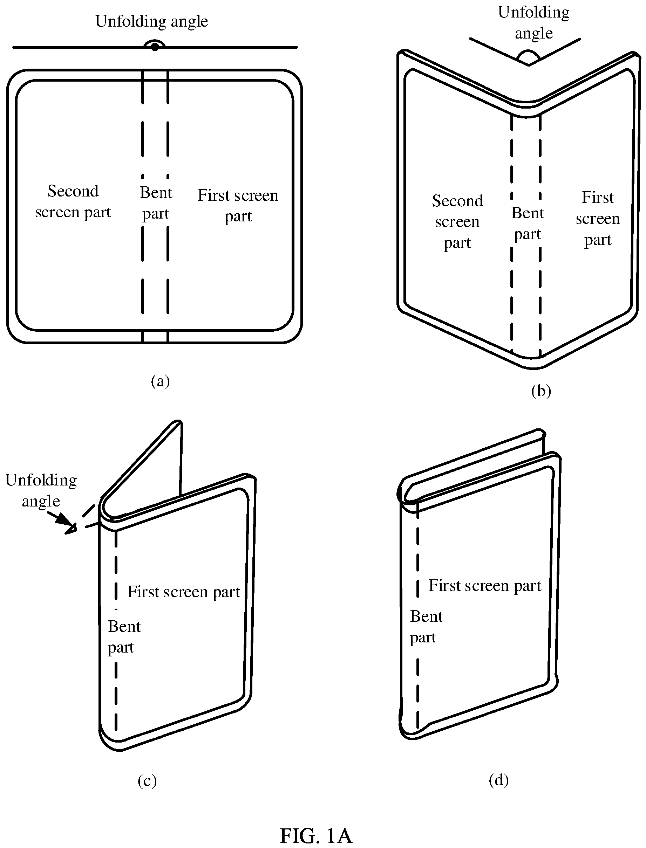

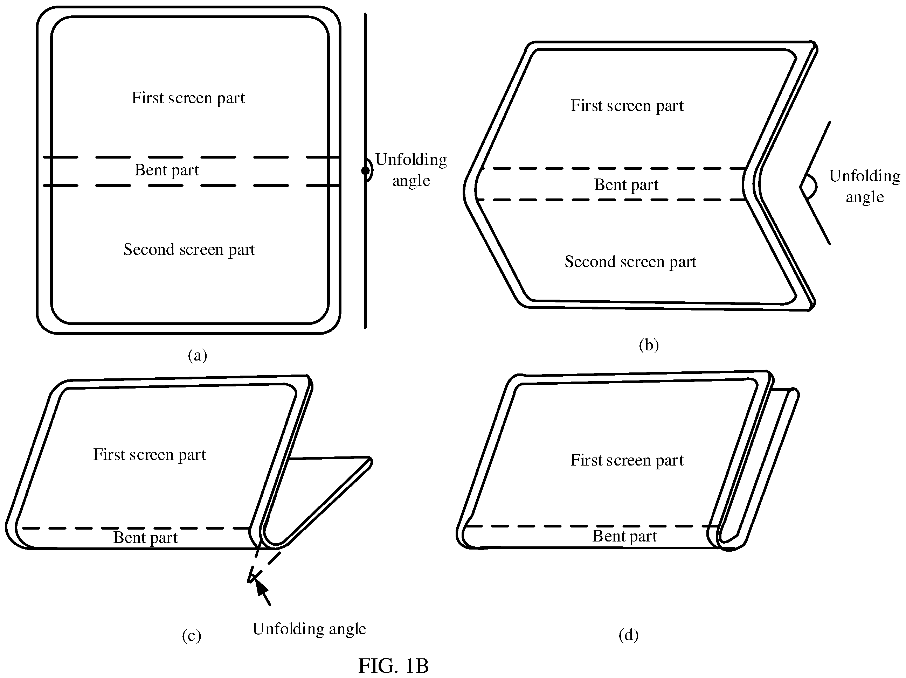

The foldable display screen usually has two folding manners: an outward foldable screen and an inward foldable screen. As shown in FIG. 1A and FIG. 1B, after an outward-folding foldable screen is folded, different screen parts of the foldable display screen are presented back to back.

For example, with reference to the foldable display screen shown in FIG. 1A, the foldable display screen has three parts: a bent part, and a first screen part and a second screen part that are on two sides of the bent part.

When the bent part is bent or deformed, an included angle (referred to as an unfolding angle for short below) between the first screen part and the second screen part changes, as shown in (b) and (c) in FIG. 1A.

During actual application, the foldable display screen usually has two physical states: an unfolded state shown in (a) in FIG. 1A, and a folded state shown in (d) in FIG. 1A. In a state change process (referred to as a state change process for short below) in which the foldable display screen is switched from one physical state to another physical state, the foldable display screen further presents a half-folded intermediate state, as shown in (b) and (c) in FIG. 1A.

In some scenarios, the electronic device may determine the physical state of the foldable display screen through an unfolding angle. For example, when the unfolding angle is within an interval (namely, a preset unfolded state condition) between a first threshold and 180 degrees, the electronic device determines that the physical state of the foldable display screen is the unfolded state. When the unfolding angle is within an interval (namely, a preset folded state condition) between 0 degrees and a second threshold, the electronic device determines that the physical state of the foldable display screen is the folded state. When the unfolding angle is within an interval (namely, a preset intermediate state condition) between the second threshold and the first threshold, the electronic device determines that the physical state of the foldable display screen is the intermediate state. A value of the first threshold is greater than a value of the second threshold, and the first threshold and the second threshold may be specifically set based on an actual application. For example, the first threshold is 180 degrees, 170 degrees, or 150 degrees, and the second threshold is 0 degrees, 5 degrees, 45 degrees, or 90 degrees.

In the example shown in FIG. 1A, a folding manner of the foldable display screen is left-right folding (namely, vertical folding). In some other embodiments, a folding manner of the foldable display screen may alternatively be up-down folding (namely, horizontal folding), as shown in FIG. 1B. The folding manner of the foldable display screen is not limited in embodiments of this application.

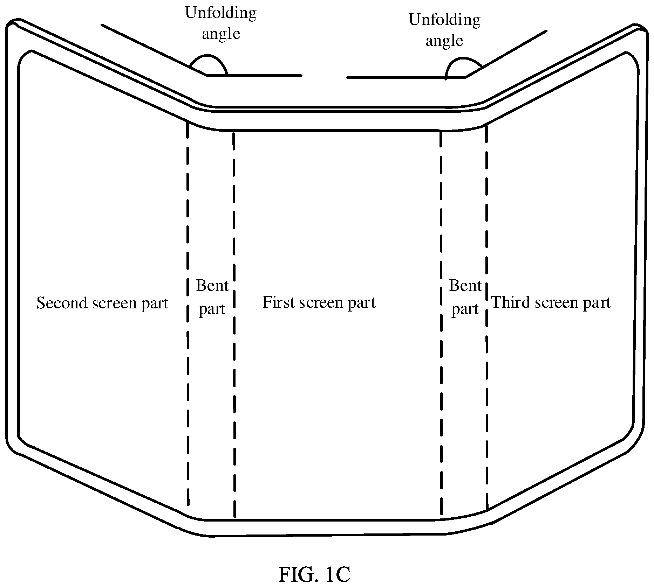

The foldable display screens shown in FIG. 1A and FIG. 1B include two screen parts. It may be understood that the method provided in embodiments of this application may be further applicable to a foldable display screen having three or more screen parts, for example, a foldable display screen having three screen parts, as shown in FIG. 1C. When an unfolding angle between any two adjacent screen parts meets the preset folded state condition, the physical state of the foldable display screen is the folded state. When all two adjacent screen parts meet the preset unfolded state condition, the physical state of the foldable display screen is the unfolded state. Other cases fall within the intermediate state.

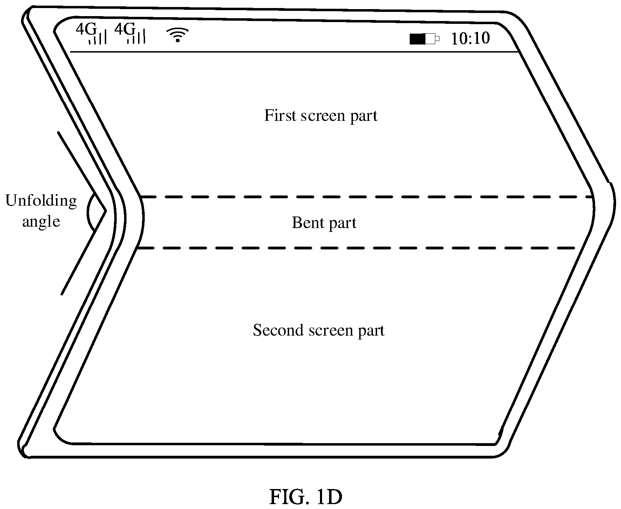

Refer to FIG. 1D. After an inward-folding foldable display screen is folded, different screen parts of the foldable display screen are presented face to face. A folding form of inner folding is not limited in this application. For example, the folding form may be another folding form such as a three-fold screen.

In embodiments of this application, the foldable display screen may further be a rollable screen in addition to the outward foldable screen and the inward foldable screen. A type and a folding manner of the foldable display screen are not limited in embodiments of this application.

In the following embodiments of this application, a display screen in an outward folding manner is used as an example to describe the method provided in this application. The outward folding manner means that after the foldable display screen is folded, at least one screen part is visible on a front side and at least one screen part is on a back side. In other embodiments, the method provided in embodiments of this application is not limited to be definitely applied to a scenario of the display screen in the outward folding manner.

The physical state of the foldable display screen and a change of the display state are further described below by using the foldable display screen shown in FIG. 1A.

As shown in (a) in FIG. 1A, the physical state of the foldable display screen is the unfolded state. When the foldable display screen is in a working state (display state), the first screen part, the second screen part, and the bent part are all in the display state. In this way, a full screen of the entire foldable display screen can be used to display content.

As shown in (d) in FIG. 1A, the physical state of the foldable display screen is the folded state. When the foldable display screen is in the working state, a default primary screen (for example, the first screen part) is in the display state and can display content, while a secondary screen (for example, the second screen part) set by default is in a non-display state, and displays no content, or is in a screen-off state. Certainly, the user may operate the electronic device, the primary screen, or the secondary screen (for example, flipping the electronic device or double-tapping the secondary screen), to set the secondary screen to be in the display state and set the primary screen to be in the non-display state. The default primary screen and the default secondary screen in the foldable display screen may be set by the user based on an actual use situation, or may be set by default before the electronic device is delivered.

As shown in (d) in FIG. 1A, the physical state of the foldable display screen is the folded state. When the foldable display screen is in the working state, the electronic device may determine which screen part is visible to the user, for example, may detect whether a face exists in front of a camera by using the camera located at a screen part, or determine whether the user exists in front of an infrared sensor based on an operation manner in which the user folds the foldable display screen or by using the infrared sensor located at a screen part. When determining that the first screen part is visible to the user, the electronic device sets the first screen part to be in the display state, so as to display content, and then sets the second screen part to be in the non-display state, so as not to display content or to be in the screen-off state. In other embodiments, the second screen part may also display content and/or have a capability of controlling the second screen part.

In some embodiments, in a scenario in which the foldable display screen is in the folded state shown in (d) in FIG. 1A, when setting a screen part to be in the display state, the electronic device may further set the bent part connected to the screen part to be in the display state, so as to display content.

In embodiments of this application, the display state of the foldable display screen changes as the physical state of the foldable display screen changes. For example, when the physical state and the display state of the foldable display screen are shown in (a) in FIG. 1A, the user may fold the foldable display screen, so that the physical state and the display state of the foldable display screen are changed to be those shown in (d) in FIG. 1A. For another example, when the physical state and the display state of the foldable display screen are shown in (d) in FIG. 1A, the user may unfold the foldable display screen, so that the physical state and the display state of the foldable display screen are changed to be those shown in (a) in FIG. 1A.

(3) A screen display area is located on a screen that is on the foldable display screen and that is in the display state, and is an area for drawing and displaying an interface. For different physical states of the foldable display screen, sizes and locations of screen display areas may be the same or may be different. Generally, the size of the screen display area is the same as a size of a screen currently in the display state.

For example, when the foldable display screen is in the unfolded state, the size of the screen display area is the same as a size of the entire foldable display screen, as shown in (a) in FIG. 1A. When the foldable display screen is in the folded state, the size of the screen display area is the same as a size of the primary screen, as shown in (d) in FIG. 1A.

The following describes a display principle of the screen display area. It should be understood that the following display principle is merely described as an example, to understand an implementation process of this application. In another technology or a technology developed in the future, there may be another display method. This is not limited in this application.

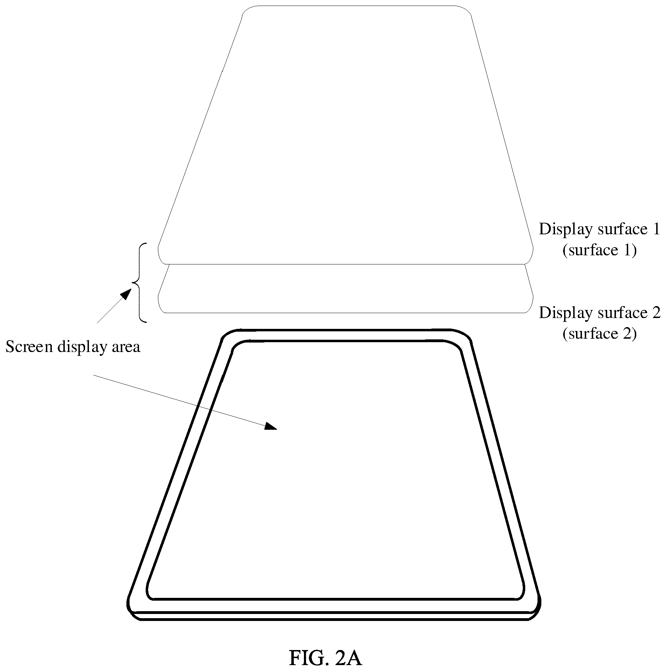

The screen display area includes one or more display surfaces (surfaces), as shown in FIG. 2A. Optionally, a size of each surface is the same as the size of the screen display area. In addition, when the screen display area includes a plurality of surfaces, optionally, the plurality of surfaces overlap each other. Each surface is used to draw an interface, and an interface finally displayed in the screen display area is essentially an interface in which interfaces on surfaces included in the screen display area are superposed.

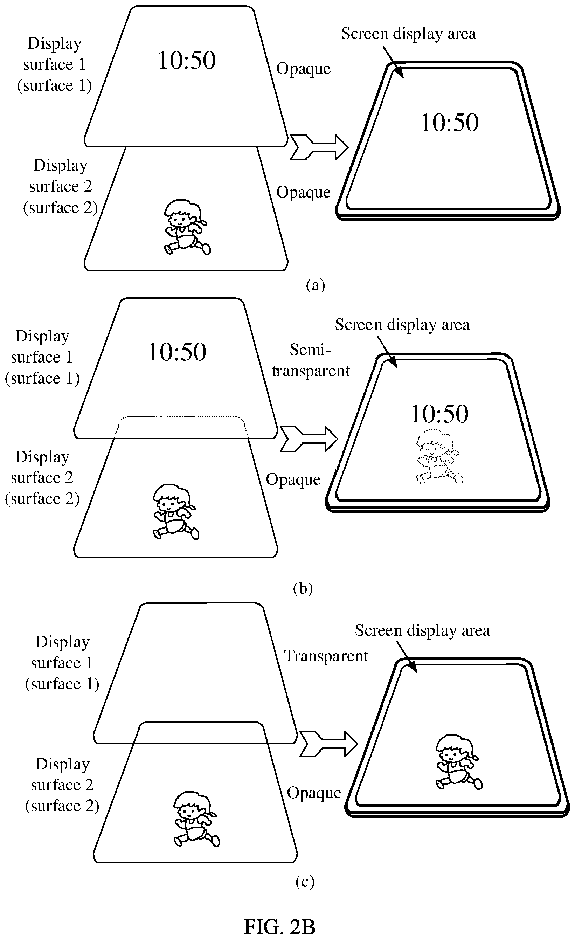

Refer to FIG. 2B. For example, the screen display area includes two display surfaces: a surface 1 and a surface 2. When an interface on the upper-layer surface 1 is opaque, an interface actually displayed (that is, visible to the user) in the screen display area is the interface on the surface 1, as shown in (a) in FIG. 2B. When an interface on the upper-layer surface 1 is semitransparent, and an interface on the lower-layer surface 2 is opaque, an interface actually displayed in the screen display area is the interface on the surface 1 and the interface on the surface 2, as shown in (b) in FIG. 2B. When an interface on the upper-layer surface 1 is transparent, and an interface on the lower-layer surface is opaque, an interface actually displayed in the screen display area is the interface on the surface 2, as shown in (c) in FIG. 2B. It may be understood that, on the surface 1 or the surface 2, some areas may be transparent, and some areas may be opaque or semitransparent.

The foldable display screen described in the foregoing embodiments and the related accompanying drawings is merely used to explain the technical solutions of this application but not a limitation. Shapes, appearances, and materials of screen parts of the foldable display screen, a quantity of screen parts, a connection manner between the screen parts, and a folding manner are not limited in this application.

(4) The interface indicates a user interface (user interface, UI), is presented on the foldable display screen, is a medium for interaction and information exchange between the electronic device and the user, and may implement information conversion between an internal data form of the device and a visual form of the user.

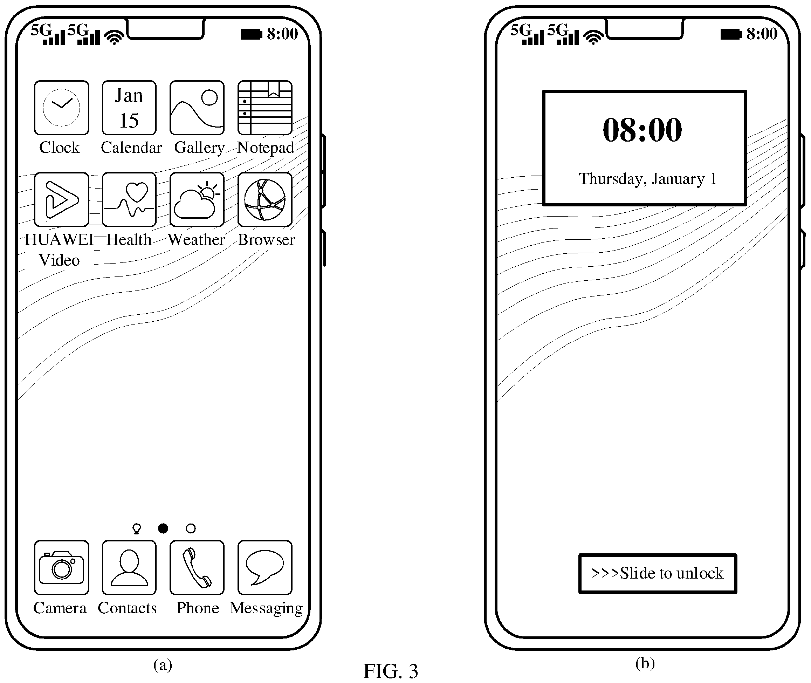

A specific representation form of the interface may be an image or a window (window). When a displayed interface is an image, the user usually cannot perform any editing processing on the image, but may exit the interface by performing some operations. The window is responsible for displaying and processing information, and the user can perform an operation in the window. Take a mobile phone as an example. The window includes a main interface window (for example, a launcher window), an application window, and the like, and further includes a window in a screen lock state. The main interface window includes a wallpaper and icons that are displayed on the wallpaper and that are of a plurality of applications, for example, an icon of a Camera application and an icon of a Gallery application, as shown in (a) in FIG. 3. The window in the screen lock state may include a wallpaper and other display information (for example, time), as shown in (b) in FIG. 3.

The wallpaper is a background picture set in the electronic device. The wallpaper may include a static wallpaper, a live wallpaper, and the like. This is not limited in embodiments of this application.

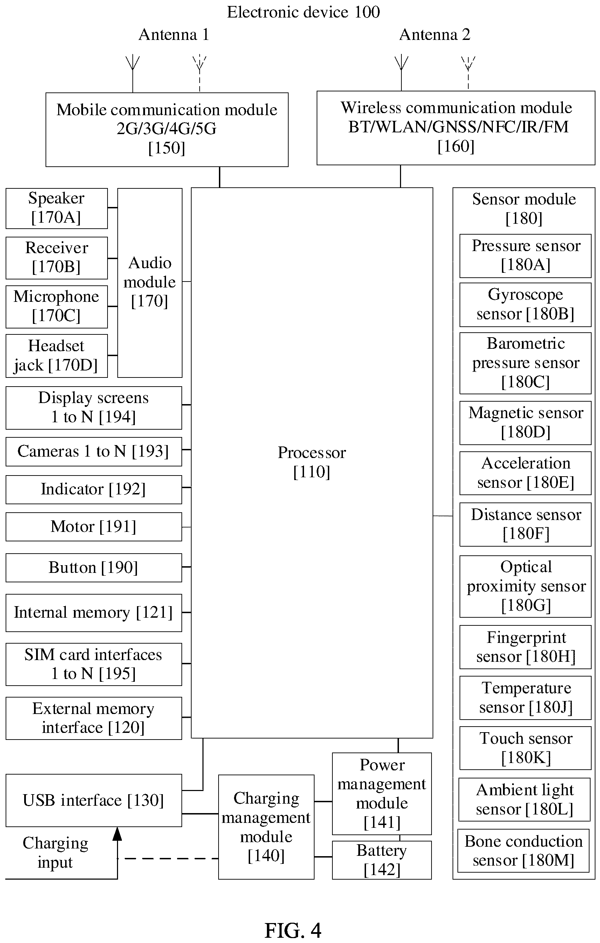

FIG. 4 is an example diagram of an internal hardware structure of an electronic device according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display processing unit (display processing unit, DPU), and/or a neural-network processing unit (neural-network processing unit, NPU). Different processing units may be separate devices, or may be integrated into one or more processors. In some embodiments, the electronic device 100 may alternatively include one or more processors 110. The processor may be a nerve center and a command center of the electronic device 300. The processor may generate an operation control signal based on an instruction operation code and a time sequence signal, to complete control of instruction reading and instruction execution. A memory may be disposed in the processor 110, and is configured to store instructions and data.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The USB interface 130 is an interface that conforms to USB standard specifications, and may be specifically a mini USB interface, a micro USB interface, a USB Type-C interface, or the like. The USB interface 130 may be configured to connect to a charger to charge the electronic device 100, and may also be configured to transmit data between the electronic device 100 and a peripheral device, or may be configured to connect to a headset for playing audio through the headset.

The sensor module 180 may include one or more of the following: a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M. In embodiments of this application, optionally, the sensor may detect an unfolding angle of a foldable display screen, so that the processor 110 may display dynamic change effect of a wallpaper in a user interface in a display area of the foldable display screen based on a change of the unfolding angle.

The charging management module 140 is configured to receive a charging input from the charger. The power management module 141 is configured to connect to the battery 142, the charging management module 140, and the processor 110. A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution that includes wireless communication such as 2G/3G/4G/5G and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low frequency baseband signal. Then, the demodulator transfers the low-frequency baseband signal obtained through demodulation to the baseband processor for processing. After being processed by the baseband processor, the low frequency baseband signal is transmitted to the application processor. The application processor outputs a sound signal through an audio device (which is not limited to the speaker 170A, the receiver 170B, and the like), or displays an image or a video through the display screen 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The electronic device 100 may implement a shooting function by using the ISP, the camera 193, the video codec, the GPU, the display screen 194, the application processor, and the like.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external storage card.

The electronic device 100 may implement a display function by using the GPU, the display screen 194, the application processor AP, and the like. The display screen 194 is configured to display an image, a video, and the like. The display screen 194 in embodiments of this application is a foldable display screen. For related descriptions, refer to the screens shown in FIG. 1A, FIG. 1B, FIG. 1C, and FIG. 1D.

The electronic device 100 may implement an audio function such as music playing and recording by using the audio module 170, the speaker 170A, the receiver 170B, the microphone 170C, the headset jack 170D, the application processor, and the like.

It may be understood that a structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

A software system of the electronic device may use a layered architecture, an event-driven architecture, a microkernel architecture, a microservice architecture, or a cloud architecture. In embodiments of this application, a software system (for example, an Android Android^{®} system) of a layered architecture is used as an example to describe a software structure of an electronic device.

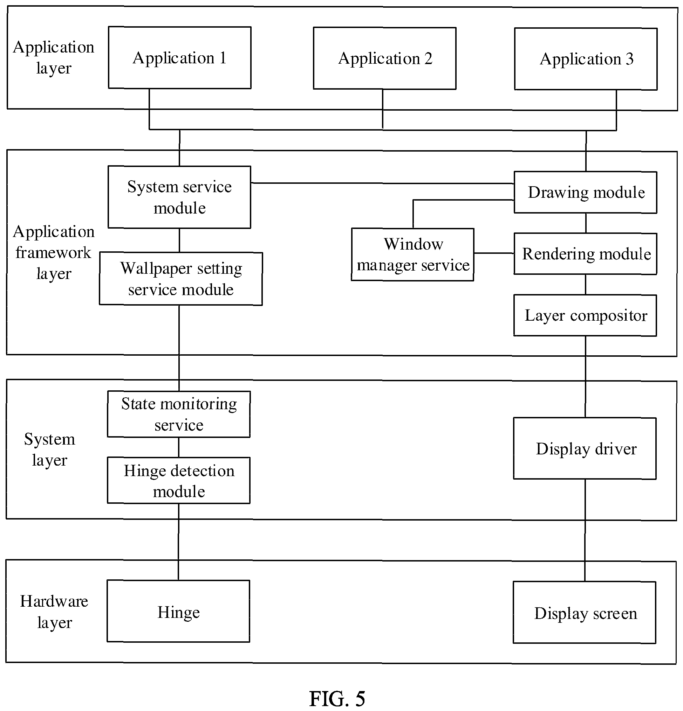

FIG. 5 is a diagram of a layered software structure of an electronic device according to an embodiment of this application. In a layered architecture, a software system of the electronic device is divided into several layers, and each layer has a clear role and task. The layers communicate with each other through software interfaces.

In some embodiments, an Android system may be divided into four layers. They are respectively an application (application) layer, an application framework layer (application framework), an Android runtime (Android runtime) and system library, and a kernel (kernel) layer. Layers of the software structure of the electronic device are not limited in embodiments of this application. The Android runtime and system library, and the kernel layer can be considered as one layer, which is referred to as a system layer. It should be understood that, in FIG. 5, a hardware layer in the electronic device is further added based on the Android system.

It should be understood that modules included in the layers shown in FIG. 5 are modules in embodiments of this application, and modules included in the following layers do not constitute a limitation on a structure of the electronic device and a layer (an example for description) at which modules are deployed. In an embodiment, the modules shown in FIG. 5 may be separately deployed, or several modules may be deployed together. Division into the modules in FIG. 5 is an example. Names of the modules shown in FIG. 5 are examples.

The application layer may include a series of application packages. The application layer may include applications such as Camera, Gallery, Calendar, Call, Map, Navigation, Bluetooth, Music, Video, and Messaging. The application may include a system application and a third-party application. In FIG. 5, an example in which the system application includes a desktop application and a wallpaper application is used.

The application framework layer may provide an application programming interface (application programming interface, API) and a programming framework for an application at the application layer. The application framework layer may include some predefined functions. Refer to FIG. 5. The application framework layer may include a system service module, a window manager service (window manager service, WMS), a drawing module, a rendering module, and a layer compositor (Surface Flinger, SF).

The system service module may provide a listening service for an application, for example, may listen to a change of a physical state of a foldable display screen, and may generate a first animation in a process in which the physical state of the foldable display screen changes, to implement dynamic change effect of a wallpaper. The wallpaper setting service module is configured to determine change information about the wallpaper in the process in which the physical state of the foldable display screen changes, and provide the information to the system service module. The window manager service is configured to manage a user interface. The drawing module is configured to draw a user interface. The rendering module is configured to perform rendering processing on the user interface drawn by the drawing module. The layer compositor is configured to perform layer composition on each rendered layer to obtain a to-be-displayed user interface.

In embodiments of this application, the Android runtime and system library, and the kernel layer are considered as one layer. Therefore, the system layer may include functional modules of the Android runtime and system library, and the kernel layer. Refer to FIG. 5. The system layer may include a plurality of functional modules, for example, a state monitoring service, a surface manager (surface manager), a media library (Media Library), a three-dimensional graphics processing library (for example, OpenGL ES), and a 2D graphics engine (for example, SGL). The state monitoring service is configured to determine an orientation of the electronic device, the physical state of the foldable display screen, and the like based on monitoring data reported by the kernel layer. It should be understood that, in FIG. 5, an example in which the system layer includes the state monitoring service is used for description. The system layer further includes a hinge detection module, configured to obtain an angle of a hinge, and report the angle to the state monitoring service, so that the state monitoring service determines the physical state and an unfolding angle of the foldable display screen based on the angle of the hinge.

In addition, the system layer further includes a hardware driver, configured to drive hardware to work. For example, a driver layer includes a sensor driver, a display driver (display driver), a graphics processing unit driver (graphics processing unit driver, GPU driver), and the like. This is not limited in embodiments of this application. It should be understood that FIG. 5 shows a display driver in embodiments of this application. The display driver is configured to drive the foldable display screen to display the user interface.

The hardware layer includes hardware in the electronic device. It should be understood that the hardware layer in FIG. 5 shows a hinge configured to support folding and unfolding of the foldable display screen, a display screen, and the like in the following embodiments.

The following describes an electronic device display method provided in embodiments of this application with reference to the accompanying drawings. The following embodiments may be combined with each other, and same or similar concepts or processes may not be repeatedly described in some embodiments.

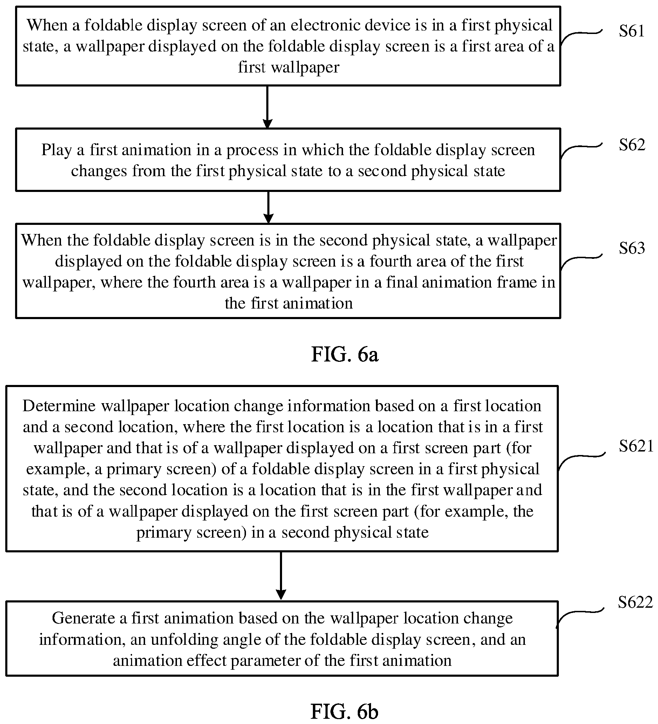

FIG. 6a is a schematic flowchart of a display method applied to an electronic device having a foldable display screen according to an embodiment of this application. As shown in the figure, the procedure may include the following steps.

S61: When the foldable display screen of the electronic device is in a first physical state, the foldable display screen displays a first area of a first wallpaper.

Optionally, the first wallpaper may be a full-screen wallpaper, namely, a screen background displayed on the foldable display screen in an unfolded state. When the foldable display screen is in the unfolded state, a size of the full-screen wallpaper is equivalent to a size of a screen display area in the unfolded state, and the size of the screen display area is equivalent to a screen size in the unfolded state. A size of the first wallpaper may alternatively be greater than the size of the full-screen wallpaper.

For example, the foldable display screen is an outward foldable screen or an inward foldable screen. The first physical state of the foldable display screen may be one of the following states:
- an unfolded state, for example, as shown in (a) in FIG. 1A, or as shown in (a) in FIG. 1B;
- a folded state, for example, as shown in (d) in FIG. 1A, or as shown in (d) in FIG. 1B; and
- an intermediate state, for example, as shown in (b) or (c) in FIG. 1A, or as shown in (b) or (c) in FIG. 1B.

For example, the first wallpaper is the full-screen wallpaper. When a physical state of the foldable display screen is the unfolded state, the first area of the global wallpaper is an entire area of the full-screen wallpaper. In other words, in a user interface displayed on the foldable display screen in the unfolded state, a wallpaper in the user interface is the entire area of the full-screen wallpaper.

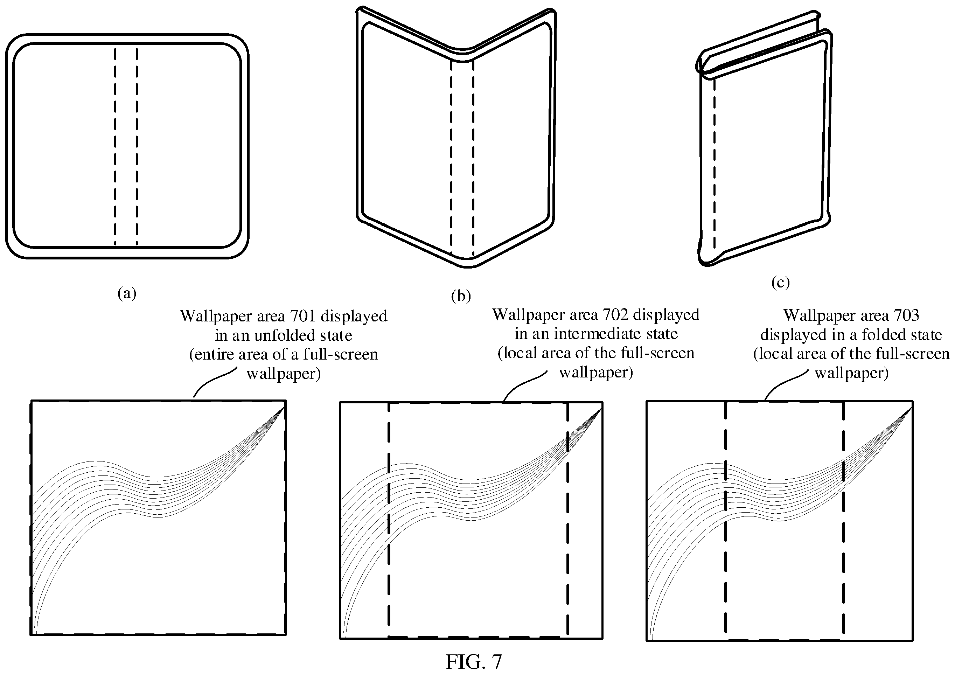

The foldable display screen shown in FIG. 1A is used as an example. (a) in FIG. 7 is a diagram of a wallpaper in a user interface displayed on a screen in an unfolded state. In the unfolded state, the wallpaper in the user interface is an entire area 701 of a full-screen wallpaper. (b) in FIG. 7 is a diagram of a wallpaper in a user interface displayed on a screen in an intermediate state. In the intermediate state, the wallpaper in the user interface is a local area 702 at a location of a full-screen wallpaper. (c) in FIG. 7 is a diagram of a wallpaper in a user interface displayed on a screen in a folded state. In the folded state, the wallpaper in the user interface is a local area 703 at a specific location of a full-screen wallpaper. Optionally, the user interface may be a main interface (launcher interface), a screen lock interface, or the like. In addition to the wallpaper, the user interface may further include another interface element, for example, may include a text, a picture, and a desktop widget (for example, a desktop widget used to display time or a schedule), and may further include a medium operation window (used to perform a simple control operation on a medium that is being played), and the like.

It can be learned from FIG. 7 that, when the physical state of the foldable display screen is the folded state, the first area of the full-screen wallpaper is a local area of the full-screen wallpaper, and a size of the local area is equivalent to a size of a screen display area in the folded state. In other words, in a user interface displayed on the foldable display screen in the folded state, a wallpaper in the user interface is the local area of the full-screen wallpaper, and the size of the local area is equivalent to the size of the screen display area in the folded state, in other words, is equivalent to a size of a display area of a primary screen. Optionally, a local wallpaper displayed in the folded state may be any local area that is in the full-screen wallpaper and whose size is equivalent to the size of the screen display area (for example, the display area of the primary screen on the foldable display screen) in the folded state, for example, may be a local area on a right side of the full-screen wallpaper, may be a local area on a left side, or may be a local area in a middle part (as shown in (c) in FIG. 7). Optionally, a location that is in the full-screen wallpaper and that is of the wallpaper displayed in the folded state may be preset.

When the physical state of the foldable display screen is the intermediate state, the first area of the full-screen wallpaper is a local area of the full-screen wallpaper (as shown in (b) in FIG. 7), and a size of the local area is equivalent to a size of a screen display area in the intermediate state. In other words, in a user interface displayed on the foldable display screen in the intermediate state, a wallpaper in the user interface is the local area of the full-screen wallpaper, and the size of the local area is equivalent to the size of the screen display area in the intermediate state, for example, may be equal to a size of a display area of a primary screen, or may be greater than a size of a display area of a primary screen. Optionally, a local wallpaper displayed in the intermediate state may be a local area that is in the full-screen wallpaper and whose size is equivalent to the size of the screen display area (for example, the display area of the primary screen on the foldable display screen) in the intermediate state, and a location of the local area in the full-screen wallpaper is related to a location of the wallpaper displayed in the folded state in the full-screen wallpaper and an unfolding angle of the foldable display screen in the intermediate state.

S62: Play a first animation in a process in which the foldable display screen changes from the first physical state to a second physical state.

The second physical state of the foldable display screen may be one of the following states: the unfolded state, the folded state, and the intermediate state. For example, the foldable display screen is an outward foldable screen or an inward foldable screen. When the first physical state is the folded state, the second physical state is the intermediate state or the unfolded state. Correspondingly, the process of changing from the first physical state to the second physical state is a process of unfolding the foldable display screen. When the first physical state is the unfolded state, the second physical state is the intermediate state or the folded state. Correspondingly, the process of changing from the first physical state to the second physical state is a process of folding the foldable display screen. When the first physical state is a specific intermediate state (the first intermediate state), the second physical state is the unfolded state, the folded state, or another intermediate state (the second intermediate state). An unfolding angle of the foldable display screen in the first intermediate state is different from that of the foldable display screen in the second intermediate state. When the unfolding angle in the first intermediate state is less than the unfolding angle in the second intermediate state, the process of changing from the first physical state to the second physical state is a process of unfolding the foldable display screen; otherwise, the process of changing from the first physical state to the second physical state is a process of folding the foldable display screen.

In a possible implementation of this embodiment of this application, the electronic device may generate the first animation in response to the change of the foldable display screen from the first physical state to the second physical state. In this way, each animation frame in the first animation is related to a change of the physical state of the foldable display screen, so that the first animation can match a current change of the physical state of the foldable display screen.

The first animation includes a plurality of animation frames sorted in chronological order, each animation frame is a user interface, and the user interface includes a wallpaper. Optionally, the user interface may further include one or more interface elements (such as a desktop icon, a desktop widget, a text, and a picture). The plurality of animation frames are displayed one by one in chronological order, to implement animation display effect of the user interface.

In this embodiment of this application, a 1^{st} animation frame in the first animation is a user interface displayed in the first physical state, and a wallpaper in the user interface is the first area of the first wallpaper; and a final animation frame is a user interface displayed in the second physical state, and a wallpaper in the user interface is a fourth area of the first wallpaper. Correspondingly, in the process in which the foldable display screen changes from the first physical state to the second physical state, a wallpaper displayed on the screen gradually changes from the first area in the first wallpaper to the fourth area in the first wallpaper.

For example, with reference to FIG. 7, in the process of unfolding the foldable display screen, the wallpapers in the 1^{st} animation frame and the final animation frame in the first animation may include the following cases.

Case 1: When the first physical state that is the folded state is changed to the second physical state that is the unfolded state, the wallpaper in the 1^{st} animation frame in the first animation is the wallpaper area 703 (namely, the first area of the first wallpaper) shown in (c) in FIG. 7, and the wallpaper in the final animation frame in the first animation is the wallpaper area 701 (namely, the fourth area of the first wallpaper) shown in (a) in FIG. 7.

Case 2: When the first physical state that is the folded state is changed to the second physical state that is the intermediate state, the wallpaper in the 1^{st} animation frame in the first animation is the wallpaper area 703 (namely, the first area of the first wallpaper) shown in (c) in FIG. 7, and the wallpaper in the final animation frame is the wallpaper area 702 (namely, the fourth area of the first wallpaper) shown in (b) in FIG. 7.

Case 3: When the first physical state that is the intermediate state is changed to the second physical state that is the unfolded state, the wallpaper in the 1^{st} animation frame in the first animation is the wallpaper area 702 (namely, the first area of the first wallpaper) shown in (b) in FIG. 7, and the final animation frame is the wallpaper area 701 (namely, the fourth area of the first wallpaper) shown in (a) in FIG. 7.

Case 4: When the first physical state that is the unfolded state is changed to the second physical state that is the folded state, the wallpaper in the 1^{st} animation frame in the first animation is the wallpaper area 701 (namely, the first area of the first wallpaper) shown in (a) in FIG. 7, and the final animation frame is the wallpaper area 703 (namely, the fourth area of the first wallpaper) shown in (c) in FIG. 7.

Case 5: When the first physical state that is the unfolded state is changed to the second physical state that is the intermediate state (namely, the first area of the first wallpaper), the wallpaper in the 1^{st} animation frame in the first animation is the wallpaper area 701 shown in (a) in FIG. 7, and the final animation frame is the wallpaper area 702 (namely, the fourth area of the first wallpaper) shown in (b) in FIG. 7.

Case 6: When the first physical state that is the intermediate state is changed to the second physical state that is the folded state, the wallpaper in the 1^{st} animation frame in the first animation is the wallpaper area 702 (namely, the fourth area of the first wallpaper) shown in (b) in FIG. 7, and the final animation frame is the wallpaper area 703 (namely, the fourth area of the first wallpaper) shown in (c) in FIG. 7.

Case 7: When the first physical state that is the first intermediate state is changed to the second physical state that is the second intermediate state, the wallpaper in the 1^{st} animation frame in the first animation is a local area of the first wallpaper (namely, the fourth area of the first wallpaper), and the wallpaper in the final animation frame is another local area of the first wallpaper (namely, the fourth area of the first wallpaper).

Optionally, for any two animation frames such as a first frame and a second frame in the first animation (where the first frame and the second frame may be adjacent animation frames or non-adjacent animation frames), a wallpaper in the first frame is a second area of the first wallpaper, a wallpaper in the second frame is a third area of the first wallpaper, and sizes of the second area and the third area and locations of the second area and the third area in the first wallpaper are related to the unfolding angle of the foldable display screen. Optionally, a larger unfolding angle of the foldable display screen indicates a larger screen display area, and correspondingly, a larger size of a wallpaper in a user interface displayed on the screen.

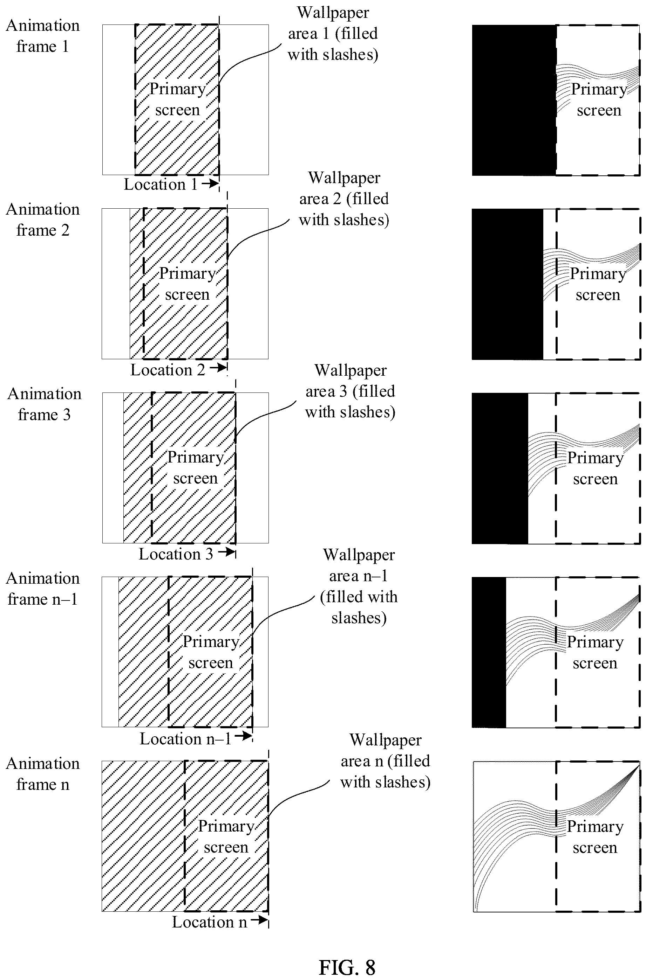

The unfolding process (to be specific, the first physical state that is the folded state is changed to the second physical state that is the unfolded state) in the case 1 is used as an example. FIG. 8 shows a principle and effect of dynamically displaying a wallpaper in a process of unfolding a foldable display screen. In FIG. 8, a left column in a diagram shows locations and sizes of wallpapers in each animation frame relative to a full-screen wallpaper, and a right column in the diagram shows screen display effect corresponding to each animation frame. As shown in FIG. 8, the first animation includes n animation frames in chronological order: an animation frame 1, an animation frame 2, an animation frame 3, ..., an animation frame n-2, an animation frame n-1, and an animation frame n. It is assumed that a location that is in the full-screen wallpaper and that is of a wallpaper boundary displayed on a right side edge of the primary screen represents the location of the wallpaper in the animation frame relative to the full-screen wallpaper.

For the animation frame 1: A screen display area in which the frame is located includes only a display area of a first screen part (the primary screen), and a right side edge of a wallpaper in the animation frame 1 is located at a specific location 1 in the full-screen wallpaper. In other words, the wallpaper in the animation frame 1 is an area 1 (for example, an area filled with slashes in the figure) in the full-screen wallpaper.

For the animation frame 2: A screen display area in which the frame is located includes the first screen part (the primary screen) and a small part of a second screen part (a secondary screen), and a right side edge of a wallpaper in the animation frame 2 is at a location 2 in the full-screen wallpaper. In other words, the wallpaper in the animation frame 2 is an area 2 (for example, an area filled with slashes in the figure) in the full-screen wallpaper. The location 2 is on a right side of the location 1, and a size of the area 2 is greater than a size of the area 1.

For the animation frame 3: A screen display area in which the frame is located includes the display area of the first screen part (the primary screen) and a small part of the second screen part (the secondary screen), and a right side edge of a wallpaper in the animation frame 3 is at a location 3 in the full-screen wallpaper. In other words, the wallpaper in the animation frame 3 is an area 3 (for example, an area filled with slashes in the figure) in the full-screen wallpaper. The location 3 is on a right side of the location 2, and a size of the area 3 is greater than the size of the area 2.

By analogy, for the animation frame n-1: A screen display area in which the frame is located includes the display area of the first screen part (the primary screen) and a large part of the second screen part (the secondary screen), and a right side edge of a wallpaper in the animation frame n-1 is at a location n-1 in the full-screen wallpaper. In other words, the wallpaper in the animation frame n-1 is an area n-1 (for example, an area filled with slashes in the figure) in the full-screen wallpaper. The location n-1 is on a right side of a location n-2, and a size of the area n-1 is greater than a size of an area n-2.

For the animation frame n: A screen display area in which the frame is located includes the first screen part and the second screen part, and a right side edge of a wallpaper in the animation frame n is aligned with a right side edge of the full-screen wallpaper. In other words, the wallpaper in the animation frame n is an entire area (for example, an area filled with slashes in the figure) in the full-screen wallpaper.

Optionally, sizes of two adjacent animation frames may be the same. Correspondingly, sizes of wallpapers in the two animation frames may be the same. For example, in a case in which a screen display size increases by a corresponding size each time the unfolding angle of the foldable display screen increases by a specified increment (for example, increases by 1 degree each time), if a change amount of the unfolding angle within a time interval between the two adjacent animation frames does not reach the specified increment, the sizes of the two adjacent animation frames are the same.

In the screen display effect shown in the right column in the diagram in FIG. 8, an area filled in black is an area shielded by a mask. According to the dynamic wallpaper display principle shown in the left column in the diagram and with reference to the screen display effect shown in the right column in the diagram, from a perspective of user vision, as the foldable display screen is gradually unfolded, a wallpaper displayed on the screen gradually moves leftward (to be specific, a right part of the full-screen wallpaper is gradually displayed on the primary screen, that is, enters a user's view), and a size of the wallpaper gradually increases. After the screen is fully unfolded, a rightmost side edge of the full-screen wallpaper overlaps a right side edge of the display area of the first screen part, and the size of the wallpaper is the size of the full-screen wallpaper. In this way, in the process of unfolding the foldable display screen, dynamic display effect of the wallpaper can be implemented, thereby improving user experience.

In the folding manner shown in FIG. 1A, in the folded state, in a case in which a wallpaper displayed on the primary screen of the foldable display screen is located in a rightmost part of the full-screen wallpaper (to be specific, a right side edge of the displayed wallpaper overlaps the right side edge of the full-screen wallpaper), in the unfolding process, a location of the wallpaper in each animation frame in the first animation remains unchanged (to be specific, a right side edge of the wallpaper in the animation frame constantly overlaps the right side edge of the full-screen wallpaper). However, as the unfolding angle gradually increases, the screen display area gradually increases, and a left part of the full-screen wallpaper is gradually presented. After the screen is fully unfolded, the entire area of the full-screen wallpaper is all presented in the screen display area, thereby implementing dynamic display effect of the wallpaper in the process of unfolding the foldable display screen.

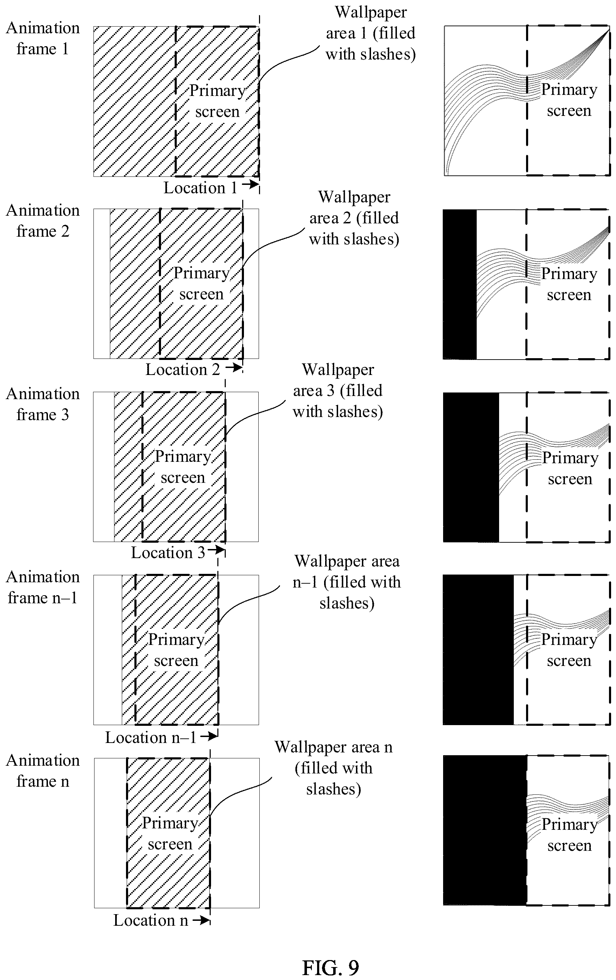

Then, the folding process (to be specific, the first physical state that is the unfolded state is changed to the second physical state that is the folded state) in the case 4 is used as an example. FIG. 9 shows a principle and effect of dynamically displaying a wallpaper in a process of folding a foldable display screen. In FIG. 9, a left column in a diagram shows a location and a size of a wallpaper in each animation frame relative to a full-screen wallpaper, and a right column in the diagram shows screen display effect corresponding to each animation frame. As shown in FIG. 9, the first animation includes n animation frames in chronological order: an animation frame 1, an animation frame 2, an animation frame 3, ..., an animation frame n-2, an animation frame n-1, and an animation frame n. In the folding process, changes of the locations and the sizes of the wallpapers in the animation frames in the first animation are opposite to those in the unfolding process shown in FIG. 8. To be specific, the location of the wallpaper gradually moves until the location of the wallpaper moves to a location of a wallpaper displayed on the primary screen in the folded state, and the size of the wallpaper gradually decreases from a full-screen size to a small-screen size in the folded state.

In the screen display effect shown in the right column in the diagram in FIG. 9, an area filled in black is an area shielded by a mask. According to the dynamic wallpaper display principle shown in the left column in the diagram and with reference to the screen display effect shown in the right column in the diagram, from a perspective of user vision, as the foldable display screen is gradually folded, a wallpaper displayed on the screen gradually moves rightward (to be specific, a right part of the full-screen wallpaper gradually exits the primary screen, that is, exits the user's view), and a size of the wallpaper gradually decreases. After the screen is fully folded, the first screen part displays a local area of a specific location in the full-screen wallpaper. In this way, in the process of folding the foldable display screen, dynamic display effect of the wallpaper can be implemented, thereby improving user experience.

In the folding manner shown in FIG. 1A, in the folded state, in a case in which a wallpaper displayed on the primary screen of the foldable display screen is located in a rightmost part of the full-screen wallpaper (to be specific, a right side edge of the displayed wallpaper overlaps the right side edge of the full-screen wallpaper), in the folding process, a location of the wallpaper in each animation frame in the first animation remains unchanged (to be specific, a right side edge of the wallpaper in the animation frame constantly overlaps the right side edge of the full-screen wallpaper). However, as the unfolding angle gradually decreases, the screen display area gradually decreases, and a left part of the full-screen wallpaper is gradually shielded by the mask. After the screen is fully folded, only a rightmost area of the full-screen wallpaper is presented in the screen display area, thereby implementing dynamic display effect of the wallpaper in the process of unfolding the foldable display screen.

According to the same principle, in a case in which the first physical state and the second physical state are other states, similar dynamic wallpaper display effect can also be implemented in the process in which the first physical state is changed to the second physical state.

The foregoing is described by using the folding manner shown in FIG. 1A as an example. According to the same principle, in a case of another folding manner, for example, in the folding manner shown in FIG. 1B or FIG. 1C, dynamic display effect of a wallpaper may also be implemented.

S63: When the foldable display screen is in the second physical state, the foldable display screen displays the fourth area of the full-screen wallpaper, where the fourth area of the full-screen wallpaper is the wallpaper in the final animation frame in the first animation.

The 1^{st} frame in the first animation frame corresponds to the first physical state, and is the user interface displayed in the first physical state (namely, a start state of the change). The final frame corresponds to the second physical state, and is the user interface displayed in the second physical state (namely, an end state of the change). For the 1^{st} frame to the final frame, the location and the size of the wallpaper gradually change. Therefore, from a perspective of the user vision, the change process is smooth and coherent, and can bring good user experience for a user.

It may be understood that, in the procedure shown in FIG. 6a, an operation of generating the first animation may be implemented at an application framework layer in a software architecture of the electronic device, for example, may be implemented by a system service module at the application framework layer. Animation effect of the wallpaper is implemented at the application framework layer, instead of being implemented by an application. This does not increase adaptation work of an application at an application layer, and is beneficial for promotion and use.

In the procedure shown in FIG. 6a, in the process in which the foldable display screen of the electronic device changes from the first physical state to the second physical state, the first animation is played, so that the animation can be displayed when the physical state of the screen changes. For any two animation frames (the first frame and the second frame) in the first animation, the wallpaper in the first frame is the second area of the first wallpaper (for example, the full-screen wallpaper), and the wallpaper in the second frame is the third area of the first wallpaper. The sizes of the second area and the third area and the locations of the second area and the third area in the first wallpaper are related to the unfolding angle of the foldable display screen. Therefore, as the unfolding angle of the foldable display screen gradually changes, the size of the wallpaper displayed on the screen and the location of the wallpaper in the full-screen wallpaper change correspondingly, thereby implementing dynamic change effect of the wallpaper in a process in which the physical state of the foldable display screen changes.

In a possible implementation, for a process of generating the first animation in step 62 in FIG. 6a, refer to a procedure shown in FIG. 6b.

Optionally, as shown in FIG. 6b, the process of generating the first animation may include the following steps.

S621: Determine wallpaper location change information based on a first location and a second location, where the first location is a location that is in the first wallpaper and that is of a wallpaper displayed on the first screen part (for example, the primary screen) of the foldable display screen in the first physical state, and the second location is a location that is in the first wallpaper and that is of a wallpaper displayed on the first screen part (for example, the primary screen) in the second physical state.

The wallpaper location change information may include a displacement value and a displacement direction from the first location to the second location.

The unfolding process shown in FIG. 8 is used as an example. The first location is a location that is in the full-screen wallpaper and that is of a right boundary of the wallpaper displayed on the primary screen in the folded state, and the second location is a location that is in the full-screen wallpaper and that is of a right boundary of the wallpaper displayed on the primary screen in the unfolded state. It may be determined, based on the first location and the second location, that the displacement direction is moving rightward, and a total displacement value is a distance from the "location 1" to a "location n" in FIG. 8.

The folding process shown in FIG. 9 is used as an example. The first location is a location that is in the full-screen wallpaper and that is of a right boundary of the wallpaper displayed on the primary screen in the unfolded state, and the second location is a location that is in the full-screen wallpaper and that is of a right boundary of the wallpaper displayed on the primary screen in the folded state. It may be determined, based on the first location and the second location, that the displacement direction is moving leftward, and a total displacement value is a distance from the "location 1" to a "location n" in FIG. 9.

S622: Generate the first animation based on the wallpaper location change information, the unfolding angle of the foldable display screen, and an animation effect parameter of the first animation.

Optionally, the animation effect parameter includes but is not limited to parameters such as play duration, an animation effect curve, and an animation effect manner. The play duration may be understood as duration used for playing an animation corresponding to the entire unfolding process from the unfolded state to the folded state, or duration used for playing an animation corresponding to the entire folding process from the folded state to the unfolded state. The animation effect curve represents dynamic display effect of an animation. For example, the animation effect curve may be a straight line. For example, displacements of same elements on two adjacent animation frames in the animation are the same. Alternatively, the animation effect curve may be a curve (for example, a parabola). For example, displacements of same elements on two adjacent animation frames in the first animation are different. For example, a displacement of same content on two adjacent animation frames at a beginning is relatively small, a displacement of same content on two adjacent animation frames gradually increases as a quantity of frames increases, and a displacement of same content on two adjacent animation frames of final several animation frames gradually decreases. The animation effect manner may include a transparency change manner. For example, the animation effect manner may include fade-in, fade-out, and the like.

A quantity of frames in the first animation is related to a change of the unfolding angle of the foldable display screen. The electronic device may determine play duration of the first animation based on the play duration and a state change degree (the state change degree represents a change degree of the unfolding angle of the foldable display screen) that are included in the animation effect parameter.

In a possible implementation of determining the play duration of the first animation, in a case in which the second physical state is the folded state or the unfolded state, regardless of whether the first physical state is the intermediate state or a non-intermediate state (for example, the folded state or the unfolded state), the play duration of the first animation is equal to the play duration included in the animation effect parameter.

In another possible implementation of determining the play duration of the first animation, in a case in which the second physical state is the folded state or the unfolded state, when the first physical state is the intermediate state, the play duration of the first animation may be adaptively reduced to adapt to the change of the unfolding angle of the foldable display screen because the unfolding angle of the foldable display screen is not changed by 180° but is less than 180°. For example, the electronic device may first obtain an angle difference of an unfolding angle from the first physical state (for example, the folded state or the unfolded state) to the intermediate state, determine a ratio of the angle difference to a maximum unfolding amplitude, and then multiply the play duration in the animation effect parameter by the ratio, to obtain the play duration of the first animation. The maximum unfolding amplitude is a change amount of an unfolding degree of the foldable display screen from the folded state to the unfolded state, or a change amount of an unfolding angle of the foldable display screen from the unfolded state to the folded state. Usually, the maximum unfolding amplitude is 180 degrees.

In another possible implementation of determining the play duration of the first animation, in a case in which both the first physical state and the second physical state are the intermediate state, the electronic device may first obtain an angle difference of an unfolding angle from the first physical state (for example, the first intermediate state) to the second physical state (for example, the second intermediate state), determine a ratio of the angle difference to a maximum unfolding amplitude, and then multiply the play duration in the animation effect parameter by the ratio, to obtain the play duration of the first animation.

After obtaining the play duration of the first animation, the electronic device may determine the quantity of frames in the first animation based on the play duration of the first animation and a refresh rate of the electronic device. It may be understood that the refresh rate of the electronic device is related to a quantity of frames that can be displayed by the electronic device in unit duration. For example, if the refresh rate of the electronic device is 60 Hz, the electronic device may display a frame every 16.67 ms. For example, the quantity of frames in the first animation is equal to a quotient value obtained by dividing the play duration of the first animation by the refresh rate of the electronic device. Further, the quotient value may be rounded, and a value obtained after the rounding is the quantity of frames in the first animation. For example, if the refresh rate of the electronic device is 60 Hz, and the play duration of the first animation is 500 ms, the quantity of frames in the first animation is 29.

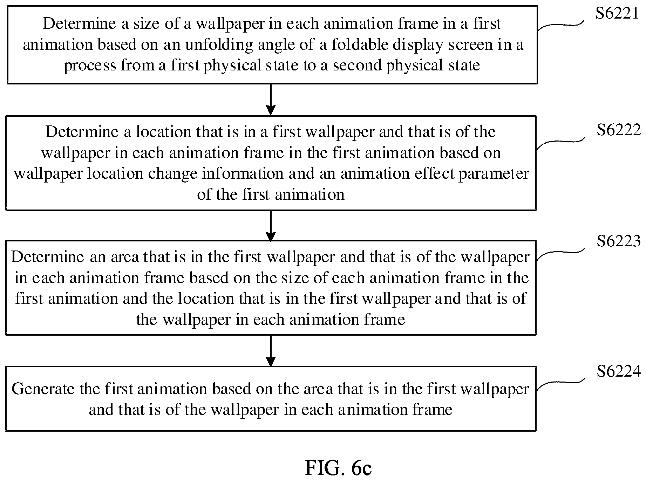

Optionally, after the play duration of the first animation and the quantity of frames in the first animation are obtained, in S622, a possible implementation of generating the first animation by the electronic device based on the wallpaper location change information, the unfolding angle of the foldable display screen, and the animation effect parameter of the first animation is shown in FIG. 6c, including the following steps.

S6221: Determine a size of a wallpaper in each animation frame in the first animation based on the unfolding angle of the foldable display screen in the process from the first physical state to the second physical state.

The size of the wallpaper in the animation frame in the first animation is related to the unfolding angle of the foldable display screen. In a possible implementation, a correspondence between various unfolding angles and sizes of screen display areas may be preset. The electronic device may query the correspondence based on the unfolding angle of the foldable display screen, and obtain a corresponding size of the screen display area. The size of the screen display area is a size of the wallpaper.

In another possible implementation, the electronic device may multiply the size of the screen display area in the unfolded state by a ratio value related to a current unfolding angle, and obtain a size of a screen display area at the current unfolding angle. The size of the screen display area is a size of a wallpaper in an animation frame at the current unfolding angle. The ratio value is a ratio of the current unfolding angle to an unfolding angle (180 degrees) in the unfolded state. For example, a relationship between the unfolding angle and the size of the screen display area may include (where S is the size of the screen display area in the unfolded state):
the unfolding angle 180 degrees, S x 100%;
the unfolding angle 150 degrees, S x 92%;
the unfolding angle 120 degrees, S x 84%;
the unfolding angle 90 degrees, S x 75%;
the unfolding angle 60 degrees, S x 67%;
the unfolding angle 30 degrees, S x 59%; and
the unfolding angle 0 degrees, S x 50%.

S6222: Determine a location that is in the first wallpaper and that is of the wallpaper in each animation frame in the first animation based on the wallpaper location change information and the animation effect parameter of the first animation.

After obtaining the quantity of frames in the first animation, the electronic device may determine, based on the quantity of frames in the first animation, the animation effect curve, and the wallpaper location change information that is obtained in S621, a location that is relative to the first wallpaper and that is of the wallpaper in each animation frame in the first animation. For example, in a case in which the animation effect curve is a straight line, the electronic device divides the displacement that is from the first location to the second location and that is determined in S621 by the quantity of frames in the first animation, to obtain the location that is relative to the first wallpaper and that is of the wallpaper in each animation frame. Location differences of wallpapers in two adjacent animation frames relative to the first wallpaper are equal. For another example, in a case in which the animation effect curve is a curve, in chronological order, location differences of wallpapers in two adjacent animation frames relative to the first wallpaper may gradually increase or gradually decrease, may first gradually increase and then gradually decrease, or comply with another change rule. This depends on a type of the animation effect curve (for example, a parabola or another curve type).

S6223: Determine an area that is in the first wallpaper and that is of the wallpaper in each animation frame based on the size of each animation frame in the first animation and the location that is in the first wallpaper and that is of the wallpaper in each animation frame.

For example, in a process of unfolding the foldable display screen, for a location that is relative to the full-screen wallpaper and that is of the wallpaper in each animation frame in the first animation and a size of the wallpaper, refer to FIG. 8. In a process of folding the foldable display screen, for a location that is relative to the full-screen wallpaper and that is of the wallpaper in each animation frame in the first animation and a size of the wallpaper, refer to FIG. 9.

For example, the animation effect curve is the straight line. From the folded state to the unfolded state, a total displacement amount d of a wallpaper location = a distance from the location 1 to the location n, and a wallpaper displacement amount Δ corresponding to each animation frame = the total displacement amount d/the quantity n of frames in the first animation. In a process from the folded state to the unfolded state, when the unfolding angle reaches 30 degrees, if a current animation frame is an i^{th} frame, a wallpaper displacement amount corresponding to the i^{th} frame may be obtained through calculation according to the foregoing method. In addition, it may be determined, based on the foregoing correspondence, that a current wallpaper size is S x 59%. In this way, when the unfolding angle reaches 30 degrees, both a location that is relative to the full-screen wallpaper and that is of a wallpaper on the display screen and a size of the wallpaper may be determined. In other words, at the unfolding angle, it can be determined which part of the area in the full-screen wallpaper needs to be displayed on the display screen.

S6224: Generate the first animation based on the area that is in the first wallpaper and that is of the wallpaper in each animation frame.

In a possible implementation, in the process of generating the first animation, the electronic device may not repeatedly draw the wallpaper in each animation frame, but separately change, based on the area that is in the first wallpaper and that is of the wallpaper in each animation frame in the first animation, a location and a size of a mask on a display surface (surface) in which the first wallpaper is located. Correspondingly, a visible area on the display surface also changes, and the visible area is a wallpaper in an animation frame, thereby obtaining the wallpaper in each animation frame. In this way, the location of the mask on the display surface (surface) in which the first wallpaper is located is changed, so that visual effect of wallpaper movement may be implemented. In addition, a processing delay of the animation frame may be shortened, processing overheads may be reduced, and generation efficiency may be improved. On the display surface (surface) in which the first wallpaper is located, a part that is not shielded by the "mask" is a visible part, and a part that is shielded by the mask is usually invisible. Operations of repeatedly drawing a wallpaper for each animation frame may be reduced, thereby reducing system overheads.

For example, the process of unfolding the foldable display screen shown in FIG. 8 and the folding process shown in FIG. 9 are used as an example. A size of a display surface (surface) in which the full-screen wallpaper is located is the same as the size of the full-screen wallpaper. On a display surface (surface) in which the full-screen wallpaper corresponding to each animation frame is located, an area filled in white is an area in which the mask is located.

In a possible implementation, in the process of generating the first animation, the electronic device may determine a transparency of the wallpaper in each animation frame in the first animation based on the quantity of frames in the first animation and the animation effect curve. For example, if the animation effect curve is the straight line, transparency differences of wallpapers in two adjacent animation frames are equal. For example, in a process in which the foldable display screen is unfolded from the folded state to the unfolded state, the electronic device may process a transparency of the wallpaper in the animation frame to gradually increase and then gradually decrease, to implement effect that the wallpaper gradually blurs and then gradually becomes clear.

In a possible implementation, if the user interface further includes other interface elements in addition to the wallpaper, the electronic device further determines locations and/or sizes of these elements in each animation frame, and includes the elements in the generated animation frame.

In a possible implementation, after obtaining locations and/or sizes of elements in each animation frame in the first animation, the electronic device may composite the elements into one animation frame in a layer composition manner, to obtain each animation frame. For example, for one animation frame, a layer composition module may perform layer composition on rendered elements in the animation frame, to obtain the animation frame. A plurality of consecutive animation frames may be obtained in a same processing manner. That is, the first animation is generated.

In a possible implementation, the animation effect parameter based on which the first animation is generated is set by a system, and the animation effect parameter is used as a default animation effect parameter of the system, and is used to generate the first animation when the foldable display screen changes from the first physical state to the second physical state. In a process of unfolding or folding the foldable display screen, the system service module in the electronic device may generate the first animation based on the default animation effect parameter of the system. The animation effect parameter is set by the system, so that unified dynamic display effect may be implemented for different applications.

In a possible implementation, the animation effect parameter based on which the first animation is generated is provided by an application (for example, a third-party application), so that the application can control dynamic effect of the first animation based on the animation effect parameter. For example, after a desktop launcher (launcher) is started, the system service module is informed of disabling a default animation effect function of the system, and the animation effect parameter (for example, including the animation effect time, the animation effect curve, and a mask parameter) of the wallpaper is notified to the system service module, so that the system service module may generate the first animation based on the animation effect parameter that is set by the application in the process in which the foldable display screen changes from the first physical state to the second physical state. The animation effect parameter is set by the application, so that different applications may set animation effect parameters according to requirements, thereby improving flexibility.

In a possible implementation, the wallpaper displayed on the foldable display screen is a live wallpaper. The live wallpaper includes a wallpaper frame sequence, and the wallpaper frame sequence includes at least two wallpaper animation frames. The wallpaper animation frames in the wallpaper frame sequence are sequentially displayed based on a specified frame rate, to generate animation effect. Optionally, sizes of the wallpaper animation frames in the wallpaper frame sequence are the same. Optionally, the size of the wallpaper animation frame in the wallpaper frame sequence is a screen display size of the foldable display screen in the unfolded state.

In a case in which the live wallpaper is used, the location that is relative to the full-screen wallpaper and that is of the wallpaper in each animation frame in the first animation and the size of the wallpaper may be determined according to the method in the foregoing embodiment. In addition, a correspondence between a wallpaper in each animation frame in the first animation and a wallpaper animation frame in the wallpaper frame sequence needs to be further determined. To be specific, a wallpaper animation frame that is in the wallpaper frame sequence and that is used in each animation frame in the first animation needs to be determined.

For example, in the process of generating the first animation, in addition to determining the wallpaper location change information based on the manner in the foregoing embodiment, the correspondence between a wallpaper in each animation frame in the first animation and a wallpaper animation frame in the wallpaper frame sequence needs to be further determined. When the first animation is generated, the first animation needs to be generated based on the wallpaper location change information, the unfolding angle of the foldable display screen, the animation effect parameter of the first animation, and the correspondence between each animation frame in the first animation and a wallpaper animation frame in the wallpaper sequence.

Optionally, the correspondence between a wallpaper in each animation frame in the first animation and a wallpaper animation frame in the wallpaper sequence is as follows: Animation frames in the first animation are in one-to-one correspondence with wallpaper animation frames in the wallpaper frame sequence, a wallpaper in a 1^{st} animation frame in the first animation is an m^{th} frame in the wallpaper frame sequence (m is an integer greater than or equal to 1), and the m^{th} frame is a wallpaper displayed on the foldable display screen in the first physical state. In other words, the wallpaper in the 1^{st} animation frame in the first animation is the m^{th} frame in the wallpaper frame sequence, and a k^{th} animation frame after the 1^{st} animation frame in the first animation frame is an (m+(k-1))^{th} frame in the wallpaper frame sequence.

Optionally, if a wallpaper in a k^{th} animation frame in the first animation is a final wallpaper animation frame in the wallpaper frame sequence, a wallpaper in a (k+1)^{th} animation frame in the first animation is a 1^{st} wallpaper animation frame in the wallpaper frame sequence. To be specific, if a wallpaper in an animation frame in the first animation is already the final wallpaper animation frame in the wallpaper frame sequence, a first wallpaper animation in the wallpaper frame sequence is used as a wallpaper in a next animation frame in the first animation, and so on.

The following uses a specific example to describe the correspondence between an animation frame in the first animation and a wallpaper animation frame in the wallpaper frame sequence in a process in which the physical state of the foldable display screen changes when the live wallpaper is used. In this example, the wallpaper frame sequence of the live wallpaper includes five wallpaper animation frames, the first animation includes 10 animation frames, and a wallpaper displayed on the foldable display screen in the first physical state is a 2^{nd} wallpaper animation frame. In this case, the correspondence between each animation frame in the first animation and each wallpaper animation frame in the wallpaper frame sequence is as follows:
the 1^{st} animation frame in the first animation uses the 2^{nd} wallpaper animation frame in the wallpaper frame sequence;
a 2^{nd} animation frame in the first animation uses a 3^{rd} wallpaper animation frame in the wallpaper frame sequence;
a 3^{rd} animation frame in the first animation uses a 4^{th} wallpaper animation frame in the wallpaper frame sequence;
a 4^{th} animation frame in the first animation uses a 5^{th} wallpaper animation frame in the wallpaper frame sequence;
a 5^{th} animation frame in the first animation uses a 1^{st} wallpaper animation frame in the wallpaper frame sequence;
a 6^{th} animation frame in the first animation uses the 2^{nd} wallpaper animation frame in the wallpaper frame sequence;
a 7^{th} animation frame in the first animation uses the 3^{rd} wallpaper animation frame in the wallpaper frame sequence;
an 8^{th} animation frame in the first animation uses the 4^{th} wallpaper animation frame in the wallpaper frame sequence;
a 9^{th} animation frame in the first animation uses the 5^{th} wallpaper animation frame in the wallpaper frame sequence; and
a 10^{th} animation frame in the first animation uses the 1^{st} wallpaper animation frame in the wallpaper frame sequence.

Based on the foregoing description, when the live wallpaper is used, the foregoing embodiment of this application may also be used to implement dynamic display effect of the wallpaper in the process in which the physical state of the foldable display screen changes, thereby improving user experience.

Based on the procedure shown in FIG. 6a and with reference to the system architecture shown in FIG. 5, the following describes a display procedure provided in an embodiment of this application.

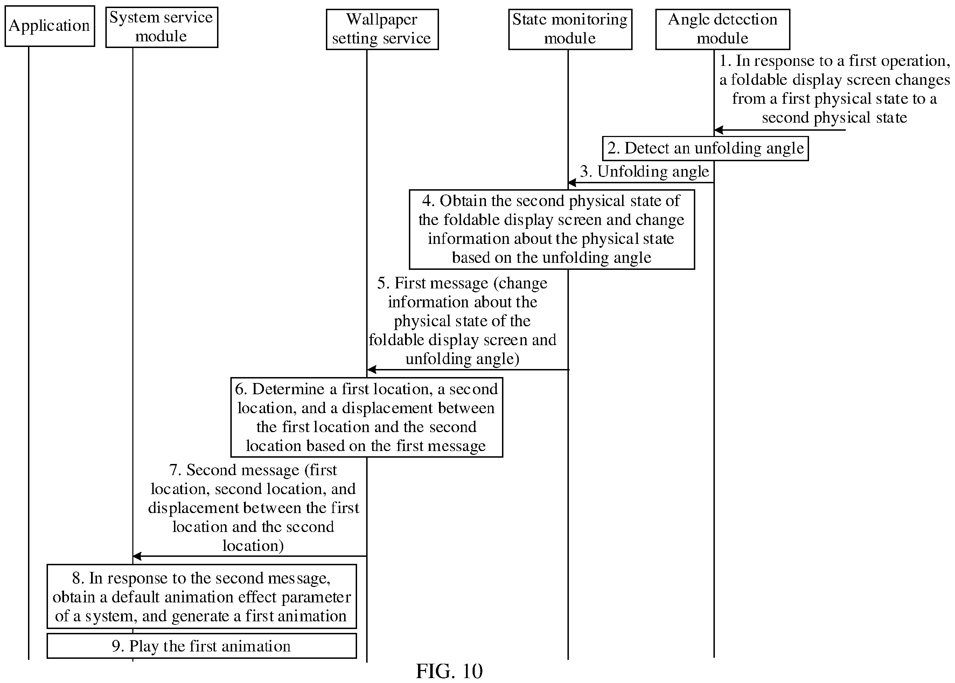

FIG. 10 shows a procedure of a display method in a process in which a physical state of a foldable display screen changes according to an embodiment of this application. As shown in the figure, the procedure may include the following steps.

Step 1: In response to a first operation, the physical state of the foldable display screen changes.

The first operation is used to trigger the foldable display screen to unfold or fold, that is, trigger the foldable display screen to change from a first physical state to a second physical state. For example, the first operation may be one of the following operations:
- A user manually unfolds or folds a screen.
- A user operates a control in an interface or a physical button on the electronic device, to trigger a screen to be unfolded or folded.
- A voice of a user provides an instruction, for example, the user says "unfolding a screen", to trigger the screen to be unfolded in a voice manner.

Step 2: In the process in which the physical state of the foldable display screen changes, an angle detection module detects an unfolding angle of the foldable display screen.

Optionally, an angle of a hinge may be detected to obtain the unfolding angle of the foldable display screen. For example, the hinge detection module collects the angle of the hinge. When the hinge moves (for example, the hinge is opened and closed), an unfolded or folded state of the foldable display screen changes even if the physical state of the foldable display screen changes. Therefore, in a process in which the foldable display screen changes from the first physical state to the second physical state, the hinge detection module may collect the angle of the hinge, to help monitor the physical state of the foldable display screen. It should be understood that the angle of the hinge may represent the unfolding angle of the foldable display screen.

Step 3: The angle monitoring module sends the detected unfolding angle to a state monitoring service.

Step 4: The state monitoring service obtains the physical state of the foldable display screen and change information about the physical state of the foldable display screen based on the unfolding angle.

In the process in which the foldable display screen changes from the first physical state to the second physical state, the state monitoring service determines the second physical state of the foldable display screen based on the angle detected by the angle detection module. For example, when the angle is 0°, it may be determined that the second physical state of the foldable display screen is a folded state. When the angle is 180°, it may be determined that the second physical state of the foldable display screen is an unfolded state. When the angle is greater than 0° and less than 180°, it may be determined that the second physical state of the foldable display screen is an intermediate state.

It may be figured out that, when the foldable display screen changes from another physical state to the first physical state, based on the foregoing description, the angle detection module may also send the unfolding angle to the state monitoring service. Therefore, the state monitoring service may store the unfolding angle when the foldable display screen is in the first physical state. The state monitoring service may obtain change information about the physical state of the foldable display screen based on an unfolding angle (referred to as a first angle) when the foldable display screen is in the first physical state and an unfolding angle (referred to as a second angle) when the foldable display screen is in the second physical state. The change information about the physical state represents that the foldable display screen is unfolded or folded. When the second angle is greater than the first angle, the state monitoring service may determine that the screen is unfolded. Correspondingly, the change information about the physical state of the screen represents that the screen is unfolded. When the second angle is less than the first angle, the state monitoring service may determine that the screen is folded. Correspondingly, the change information about the physical state of the screen represents that the screen is folded.

Step 5: The state monitoring service sends a first message to a wallpaper setting service module.

The first message may include the change information about the physical state of the screen. Further, the first message may include the unfolding angle of the foldable display screen.

Step 6: The wallpaper setting service module determines a first location, a second location, and wallpaper location change information from the first location to the second location based on information such as the change information about the physical state and the unfolding angle of the foldable display screen that are included in the first message.

The first location is a location that is in a first wallpaper and that is of a wallpaper displayed on a first screen part (for example, a primary screen) of the foldable display screen in the first physical state, and the second location is a location that is in the first wallpaper and that is of a wallpaper displayed on the first screen part (for example, the primary screen) in the second physical state. The wallpaper location change information may include a displacement value and a displacement direction from the first location to the second location.

Step 7: The wallpaper setting service module sends a second message to a system service module, where the second message includes the first location, the second location, and the wallpaper location change information from the first location to the second location.

Step 8: In response to the second message, the system service module obtains a default animation effect parameter of a system, and generates a first animation based on the location change information, the animation effect parameter, the unfolding angle, and the like.

Optionally, the system service module may obtain a window handle (WindowToken) of a wallpaper by using a wallpaper controller (WallpaperController). The window handle is used to uniquely identify a window. The system service module moves a display surface (surface) of the wallpaper based on WindowToken of the wallpaper, so that the location that is in the first wallpaper and that is of the wallpaper displayed on the first screen part (for example, the primary screen) of the foldable display screen is the first location in the first physical state. Then, based on animation effect time of the first animation and the screen unfolding angle, a size of each animation frame in the first animation is determined, and a location that is relative to a full-screen wallpaper and that is of the wallpaper in each animation frame is determined, or a moving distance of the surface of the wallpaper is determined, to generate the first animation.

The system service module may generate each animation frame in the first animation based on the unfolding angle of the foldable display screen and the default animation effect parameter (for example, including the animation duration, an animation effect curve, and the like) of the system. For a method for generating the first animation, refer to the foregoing embodiments.

Step 9: The system service module plays the first animation.

After the first animation is generated, the system service module may control the foldable display screen to display the first animation. For example, each animation frame in the first animation may be sent for display, so that a display driver drives the display screen to play the first animation, to play the first animation in a process of unfolding or folding the foldable display screen.

For example, after performing layer composition on a background and other elements in an animation frame to obtain one animation frame, a layer composition module may store the animation frame in a buffer (buffer) of the layer composition module. That each animation frame in the first animation is sent for display may be understood as follows: The layer composition module stores the animation frame obtained through layer composition in a buffer (buffer) every 16.67 ms (for example, in a case in which a refresh rate of the electronic device is 60 Hz), and the display driver obtains an animation frame from the buffer (buffer) of the layer composition module every 16.67 ms, and drives the display screen to display the animation frame after obtaining the animation frame. In this way, the foldable display screen may continuously display animation frames in the first animation. That is, the foldable display screen may play the first animation.

It should be noted that the procedure shown in FIG. 10 is merely an example. Some steps in the procedure may be optional steps, or some steps in the procedure may be recombined. This is not limited in embodiments of this application.

Based on the procedure shown in FIG. 6a and with reference to the system architecture shown in FIG. 5, the following describes a display procedure provided in an embodiment of this application.

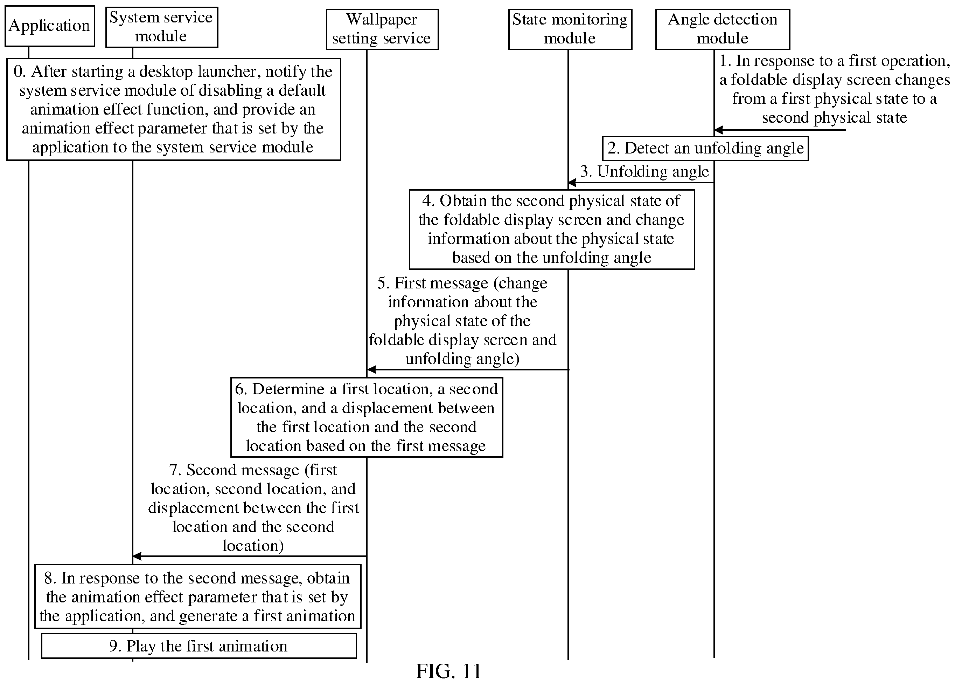

FIG. 11 shows a procedure of a display method in a process in which a physical state of a foldable display screen changes according to an embodiment of this application.

In a scenario to which this procedure is applicable, a system opens, to an application (for example, a third-party application), an interface configured to enable a function of generating a first animation based on an animation effect parameter that is set by the application, and the application may set the animation effect parameter through the interface and provide the animation effect parameter to the system, so that the system may implement, based on the animation effect parameter that is set by the application, wallpaper dynamic effect in the process in which the physical state of the foldable display screen changes. For example, the animation effect parameter that is set by the application through the interface may include animation effect time, an animation effect curve, an animation effect mask, and the like.

As shown in FIG. 11, the procedure may include the following steps.

Step 0: After starting a desktop launcher (launcher), notify the system of disabling a default animation effect function, and provide the animation effect parameter that is set by the application to a system service module.

After the launcher is started, if the application determines that a wallpaper animation effect function needs to be enabled when a physical state of a screen changes, and dynamic effect depends on the animation effect parameter that is set by the application, the application notifies the system of disabling the default animation effect function, and provides the animation effect parameter that is set by the application to the system service module. If the application does not need to enable the function, the application does not need to notify the system of disabling the default animation effect function, and does not provide the animation effect parameter to the system service module. In this way, in the process in which the physical state of the foldable display screen changes, the system service module may generate the first animation in the manner shown in FIG. 10, and play the first animation.

A specific implementation of steps 1 to 9 in FIG. 11 is basically the same as that of corresponding steps in FIG. 10, and a difference lies in that, in step 8, the system service module obtains the animation effect parameter that is set by the application, and generates the first animation based on the animation effect parameter that is set by the application.

An embodiment of this application further provides a computer-readable storage medium. The computer-readable storage medium is configured to store a computer program. When the computer program is executed by a computer, the computer may implement the method provided in the foregoing method embodiments.

An embodiment of this application further provides a computer program product. The computer program product is configured to store a computer program. When the computer program is executed by a computer, the computer may implement the method provided in the foregoing method embodiments.

An embodiment of this application further provides a chip, including a processor. The processor is coupled to a memory, and is configured to invoke a program in the memory, so that the chip implements the method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Clearly, a person skilled in the art may make various modifications and variations to this application without departing from the scope of this application. In this way, this application is intended to cover these modifications and variations of this application provided that they fall within the scope of the claims of this application and an equivalent technology thereof.

## Claims

1. An electronic device display method, applied to an electronic device having a foldable display screen, wherein the method comprises:
when the foldable display screen of the electronic device is in a first physical state, a wallpaper displayed on the foldable display screen is a first area of a first wallpaper;
playing a first animation in a process in which the foldable display screen changes from the first physical state to a second physical state, wherein the first animation comprises a first frame and a second frame, a wallpaper in the first frame is a second area of the first wallpaper, a wallpaper in the second frame is a third area of the first wallpaper, and sizes of the second area and the third area and locations of the second area and the third area in the first wallpaper are related to an unfolding angle of the foldable display screen; and
when the foldable display screen is in the second physical state, a wallpaper displayed on the foldable display screen is a fourth area of the first wallpaper, wherein the fourth area is a wallpaper in a final animation frame in the first animation.

2. The method according to claim 1, wherein the method further comprises:
generating the first animation in response to the change of the foldable display screen from the first physical state to the second physical state.

3. The method according to claim 2, wherein the generating the first animation comprises:
determining wallpaper location change information based on a first location and a second location, wherein the first location is a location that is in the first wallpaper and that is of a wallpaper displayed on a first screen part of the foldable display screen in the first physical state, and the second location is a location that is in the first wallpaper and that is of a wallpaper displayed on the first screen part in the second physical state; and
generating the first animation based on the wallpaper location change information, the unfolding angle of the foldable display screen, and an animation effect parameter of the first animation.

4. The method according to claim 3, wherein the generating the first animation based on the wallpaper location change information, the unfolding angle of the foldable display screen, and an animation effect parameter of the first animation comprises:
determining a size of a wallpaper in each animation frame in the first animation based on an unfolding angle corresponding to each animation frame in the process from the first physical state to the second physical state;
determining a location that is in the first wallpaper and that is of the wallpaper in each animation frame in the first animation based on the wallpaper location change information, the unfolding angle corresponding to each animation frame in the first animation, and the animation effect parameter of the first animation;
determining an area that is in the first wallpaper and that is of the wallpaper in each animation frame based on the size of the wallpaper in each animation frame in the first animation and the location that is in the first wallpaper and that is of the wallpaper in each animation frame; and
generating the first animation based on the area that is in the first wallpaper and that is of the wallpaper in each animation frame.

5. The method according to claim 4, wherein the determining an area that is in the first wallpaper and that is of the wallpaper in each animation frame based on the size of each animation frame in the first animation and the location that is in the first wallpaper and that is of the wallpaper in each animation frame comprises:
changing, based on the size of each animation frame in the first animation and the location that is in the first wallpaper and that is of the wallpaper in each animation frame, a location and a size of a mask on a display surface in which the first wallpaper is located, to obtain the wallpaper in each animation frame, wherein the wallpaper in each animation frame is a visible area other than an area shielded by the mask on the display surface in which the first wallpaper is located.

6. The method according to claim 2, wherein the wallpaper is a live wallpaper, the live wallpaper comprises a wallpaper frame sequence, and the wallpaper frame sequence comprises at least two wallpaper animation frames; and
the generating the first animation comprises:
determining wallpaper location change information based on a first location and a second location, wherein the first location is a location that is in the first wallpaper and that is of a wallpaper displayed on a first screen part of the foldable display screen in the first physical state, and the second location is a location that is in the first wallpaper and that is of a wallpaper displayed on the first screen part in the second physical state;
determining a correspondence between a wallpaper in each animation frame in the first animation and a wallpaper animation frame in the wallpaper frame sequence; and
generating the first animation based on the wallpaper location change information, the unfolding angle of the foldable display screen, an animation effect parameter of the first animation, and the correspondence between each animation frame in the first animation and a wallpaper animation frame in the wallpaper sequence.

7. The method according to claim 6, wherein the correspondence between a wallpaper in each animation frame in the first animation and a wallpaper animation frame in the wallpaper sequence is as follows:
animation frames in the first animation are in one-to-one correspondence with wallpaper animation frames in the wallpaper frame sequence, a wallpaper in a 1^{st} animation frame in the first animation is an m^{th} frame in the wallpaper frame sequence, and the m^{th} frame is a wallpaper displayed on the foldable display screen in the first physical state, wherein m is an integer greater than or equal to 1.

8. The method according to claim 7, wherein if a wallpaper in a k^{th} animation frame in the first animation is a final wallpaper animation frame in the wallpaper frame sequence, a wallpaper in a (k+1)^{th} animation frame in the first animation is a 1^{st} wallpaper animation frame in the wallpaper frame sequence.

9. The method according to any one of claims 3 to 8, wherein the first screen part is a primary screen of the foldable display screen.

10. The method according to any one of claims 3 to 9, wherein the animation effect parameter comprises at least one of the following: play duration, an animation effect curve, and an animation effect manner.

11. The method according to any one of claims 3 to 10, wherein when the first physical state is a folded state, the first location is a preset location in the first wallpaper.

12. The method according to any one of claims 3 to 11, wherein the method further comprises:
obtaining the animation effect parameter that is set by a system.

13. The method according to any one of claims 3 to 11, wherein the method further comprises:
obtaining the animation effect parameter that is set by an application.

14. The method according to any one of claims 1 to 13, wherein the foldable display screen comprises any one of the following: an outward foldable screen, an inward foldable screen, and a rollable screen.

15. The method according to claim 14, wherein when the foldable display screen is an outward foldable screen or an inward foldable screen, the first physical state is a folded state, an intermediate state, or an unfolded state, wherein the intermediate state is a state between the folded state and the unfolded state, and the intermediate state comprises at least one of a first intermediate state and a second intermediate state; and
when the first physical state is the folded state, the second physical state is the intermediate state or the unfolded state;
when the first physical state is the unfolded state, the second physical state is the intermediate state or the folded state; or
when the first physical state is the first intermediate state, the second physical state is the unfolded state, the folded state, or the second intermediate state.

16. An electronic device, comprising a foldable display screen and one or more processors, wherein one or more memories store one or more computer programs, the one or more computer programs comprise instructions, and when the instructions are executed by the one or more processors, the electronic device is enabled to perform the method according to any one of claims 1 to 15.

17. A computer-readable storage medium, comprising a computer program, wherein when the computer program is run on an electronic device, the electronic device is enabled to perform the method according to any one of claims 1 to 15.

18. A computer program product, wherein when the computer program product runs on an electronic device, the electronic device is enabled to perform the method according to any one of claims 1 to 15.

19. A chip system, comprising a memory configured to store a computer program, and a processor, wherein after the processor invokes the computer program from the memory and runs the computer program, an electronic device on which the chip system is installed is enabled to perform the method according to any one of claims 1 to 15.
